(19) Europäisches Patentamt / European Patent Office / Office européen des brevets

(11) EP 3 850 049 B2

(12) NEW EUROPEAN PATENT SPECIFICATION
After opposition procedure

(45) Date of publication and mention of the opposition decision:
**05.11.2025 Bulletin 2025/45**

(45) Mention of the grant of the patent:
**08.03.2023 Bulletin 2023/10**

(21) Application number: **19765521.0**

(22) Date of filing: **12.09.2019**

(51) International Patent Classification (IPC):
***C09D 183/06*** (2006.01) ***C09D 5/16*** (2006.01)
***C08G 77/12*** (2006.01) ***C08G 77/14*** (2006.01)
***C08G 77/20*** (2006.01) ***C08G 77/00*** (2006.01)
***C08L 83/04*** (2006.01) ***C08L 83/06*** (2006.01)
***C08K 5/1539*** (2006.01)

(52) Cooperative Patent Classification (CPC):
(C-Sets available)
**C08G 77/14; C08K 5/1539; C08L 83/04; C08L 83/06; C09D 183/06** (Cont.)

(86) International application number:
**PCT/EP2019/074418**

(87) International publication number:
**WO 2020/053357 (19.03.2020 Gazette 2020/12)**

# (54) FUNCTIONAL POLYSILOXANES

FUNKTIONELLE POLYSILOXANE

POLYSILOXANES FONCTIONNELS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.09.2018 US 201862730607 P**
**27.09.2018 EP 18197340**

(43) Date of publication of application:
**21.07.2021 Bulletin 2021/29**

(73) Proprietor: **Momentive Performance Materials GmbH**
**51368 Leverkusen (DE)**

(72) Inventors:
- **FELDER, Thorsten**
  **40225 Düsseldorf (DE)**
- **WITOSSEK, Anita**
  **40764 Langenfeld (DE)**
- **HEPPERLE, Johannes**
  **40764 Langenfeld (DE)**
- **DELIS, Johannes Gerardus Petrus**
  **4617 Bergen op Zoom (NL)**
- **SICLOVAN, Tiberiu Mircea**
  **New York 12148 (US)**
- **CRÄMER, Verena**
  **51467 Bergisch Gladbach (DE)**
- **NEWSHAM, David**
  **New York 12151 (US)**
- **CUMMINGS, John A.**
  **New York 12831 (US)**

(74) Representative: **Gille Hrabal Partnerschaftsgesellschaft mbB**
**Patentanwälte**
**Brucknerstraße 20**
**40593 Düsseldorf (DE)**

(56) References cited:
**WO-A1-2011/081165**
**WO-A1-2017/051084**
**US-A1- 2004 161 618**

EP 3 850 049 B2

(52) Cooperative Patent Classification (CPC): (Cont.)

C-Sets
**C08K 5/1539, C08L 83/04;**
**C08L 83/04, C08K 5/56, C08L 83/00, C08L 83/00;**
**C08L 83/06, C08K 5/56, C08L 83/00, C08L 83/00;**
**C09D 183/06, C08L 83/00**

## Description

### FIELD OF THE INVENTION

The present invention relates to new functional polysiloxanes as defined in claims 1 to 6, curable compositions comprising said functional polyorganosiloxane as defined in claim 7, cured compositions thereof as defined in claim 8, composite articles comprising said cured compositions as defined in claim 9, the use of the functional polysiloxanes as defined in claims 1 to 6 as defined in claims 10 and 11, a method of coating substrates as defined in claim 12, and a substrate as defined in claims 13 and 14. The functional polysiloxanes show improved adhesion properties in particular as additives in LSR (liquid silicone rubber) formulations or in a silicone coating for paper and a variety of polymeric substrates.

### BACKGROUND OF THE INVENTION

Anchorage (permanent adhesion) of silicone coatings to substrates such as paper and a variety of polymeric substrates, particularly polyester films, is generally poor unless reactive additives are part of the coating composition.

One common approach to improve adhesion is the addition of excess siloxane crosslinker bearing SiH moieties to effect anchorage by forming silyl esters or ethers at the substrate interface in addition to covalent bonds with the siloxane network. A limitation of this approach is that the effect is more pronounced when using poly(methylhydrogensiloxane) homopolymer crosslinkers than it is when using the faster-reacting poly(dimethylsiloxane-co-methylhydrogensiloxane) copolymer crosslinkers. As a consequence, it may be necessary to reduce coating machine line-speed in order to achieve full cure and anchorage when using such a composition. A further limitation of this approach is that the formation of silyl ethers at the substrate interface is strongly reduced in compositions with low catalyst loading and at low curing temperatures.

In another approach, the addition of an epoxide moiety to a siloxane polymer provides improved anchorage through the formation of ethers at the substrate interface. This technique is taught for both hydride-functional siloxanes as in US7842394 or US7906605 B2, and for vinyl-functional siloxanes as in US9562149 B2. However, epoxide moieties have limited effectiveness on paper substrates. Furthermore, the solubility of multifunctional epoxy siloxanes in silicone release coating polymers is low.

US7199205 relates to an organopolysiloxane-modified polysaccharide prepared by esterification reacting (A) an organopolysiloxane having residual carboxylic anhydride groups and (B) a polysaccharide having hydroxyl groups. Examples of the starting material (A) an organopolysiloxane having residual carboxylic anhydride groups are prepared by reacting SiH-functional polysiloxanes with unsaturated carboxylic anhydrides leading to polysiloxanes which do not have SiH-functionality.

US7090923, US8343632 and US7842394 disclose an additive for anchorage of release coatings which is inter alia prepared by reacting carbic anhydride and a polymethylhydrosiloxane. The additive is still poor in anchorage performance in paper release coatings.

US3899515 discloses an anhydride-functional silane useful for adhesion promotion in silicone rubber compositions.

US4381396 discloses silylnorbornane anhydrides as an adhesion promoter for RTV silicone rubber. One example of an SiH-functional disiloxane is shown, which does not have a diorganosiloxy group, but only two terminal trimethyl siloxy groups.

US5015700 and US6743884 disclose dimethylsiloxane polymers with carboxylic anhydride functionality. The siloxane polymers lacks residual SiH functionality.

WO-A-2011/081165 describes a curable silicone composition used for the preparation of coatings having good adhesive properties onto polymeric surfaces. The coating compositions comprise an organopolysiloxane comprising at least two alkenyl groups, a polysiloxane comprising at least one hydridosilyl group SiH, a functional polyorganosiloxane and a platinium hydrosilylation catalyst. The functional polysiloxane is a silicone compound end-capped at one extremity by a succinic anhydride group and does not contain SiH groups along the chain.

Finally, WO-A-2017/051084 discloses crosslinkable silicone compositions used for the preparation of non-stick (release) coatings. The compositions comprise an organopolysiloxane comprising at least two alkenyl groups, a polysiloxane comprising at least one hydridosilyl group SiH, a functional polyorganosiloxane as additive and a platinium hydrosilylation catalyst. The additive is a polyorganosiloxane functionalised by glycidyl-containing groups and comprises SiH groups along the chain.

### SUMMARY OF THE INVENTION

The present invention provides functional polysiloxanes as defined in claims 1 to 6, curable compositions comprising said functional polyorganosiloxane as defined in claim 7, cured compositions thereof as defined in claim 8,

composite articles comprising said cured compositions as defined in claim 9, the use of the functional polysiloxanes as defined in claims 1 to 6 as defined in claims 10 and 11, a method of coating substrates as defined in claim 12, and a substrate as defined in claims 13 and 14.

The functional polysiloxanes show improved adhesion properties in particular as additives in LSR (liquid silicone rubber) formulations or in a silicone coating for paper and a variety of polymeric substrates.

## DETAILED DESCRIPTION OF THE INVENTION

In evaluating the capability of anhydride-bearing siloxane crosslinkers to improve anchorage, the inventors surprisingly found out that a marked advantage is being brought about by polymers having the anhydride functionality preferably selectively located at the ends of the crosslinking polymer and preferably with certain ratios of methylhydridosiloxane to dimethylsiloxane in the polymer backbone. Such a family of structures confers improved anchorage properties over mixtures having a random functionality distribution.

The object underlying the present invention was to provide a new anchorage additive which shows improved adhesion properties in particular as additives in LSR (liquid silicone rubber) formulations or in silicone coatings in particular for paper and a variety of polymeric substrates.

In accordance with the present invention a functional polyorganosiloxane as defined in claim 1 is provided comprising at least one SiH group, at least one diorganosiloxy group (i.e. a D = $R_2SiO_{2/2}$ group as defined below), which does not comprise an acid anhydride group, and at least one siloxy group having at least one organic group bound to a silicon atom via a carbon atom, said organic group comprising at least one acid anhydride group. That is, the organo moieties of the at least one diorganosiloxy group do not comprise an acid anhydride group. In particular, the diorganosiloxy group is a dialkyl-, a diaryl- or an alkyl/aryl-siloxy group, most preferably a dimethylsiloxy group.

In a preferred embodiment of the present invention the functional polyorganosiloxane is a linear polyorganosiloxane. Preferably the linear polyorganosiloxane has at least one terminal organic group comprising an acid anhydride group. Terminal organic group means that said organic group is bound to a terminal silicon atom (i.e. an M group according to silicone nomenclature) whereas a pendent organic group is group that is bound to a non-terminal silicon atom (i.e. a D group according to silicone nomenclature).

Preferably the functional polyorganosiloxane of the invention has a number average molecular weight Mn in the range of about 500 to about 10000, preferably about 800 to about 8200 as determined by GPC using polystyrene standards.

A preferred functional polyorganosiloxane according to the invention as defined in claim 1 comprises at least three siloxy units of the formula (I):

$$R_aR^1_bH_cSiO_{(4-a-b-c)/2} \qquad (I)$$

wherein

- a is 0, 1, 2, or 3,
- b is 0 or 1,
- c is 0 or 1,
- R represents an organic group, which does not comprise an acid anhydride group, and
- $R^1$ represents an organic group, comprising at least one, preferably one acid anhydride group,
- with the proviso that there is at least one siloxy unit wherein b = 1 and c = 0, at least one siloxy unit wherein c = 1, and b = 0, and at least one siloxy unit wherein a = 2, and b = c = 0. The proviso that there is at least one siloxy unit wherein b = 1 and c = 0 means that there is at least one siloxy unit having one residue $R^1$, representing an organic group, comprising at least one, preferably one acid anhydride group, and that such siloxy group does not have a hydrogen substituent. The proviso that there is at least one siloxy unit wherein c = 1 and b = 0 means that there is at least one SiH-functional siloxy group, which does not have an $R^1$ substituent group. The proviso that there is at least one siloxy unit wherein a = 2, and b = c = 0, means that there is at least one diorganosiloxy group, the organic groups do not have an acid anhydride group.

R represents an organic group, which is bound to the silicon atom via a carbon atom, and which does not have an acid anhydride group. Preferably R is selected from optionally substituted hydrocarbyl groups with up to 30 carbon atoms and poly($C_2$-$C_4$)-alkylene ether groups with up to 1000 alkylene oxy units.

Preferably the organic groups R are free of aliphatic unsaturation.

The organic group R is preferably selected from n-, iso, or tertiary alkyl, alkoxyalkyl, $C_5$-$C_{30}$-cyclic alkyl, or $C_6$-$C_{30}$-aryl, alkylaryl, which groups can be substituted in addition by one or more O-, N-, S- or F-atom, or poly($C_2$-$C_4$)-alkylene ethers with up to 500 alkylene oxy units. Examples of suitable monovalent hydrocarbon radicals include alkyl

radicals, preferably such as $CH_3$-, $CH_3CH_2$-, $(CH_3)_2CH$-, $C_8H_{17}$- and $C_{10}H_{21}$-, and cycloaliphatic radicals, such as cyclohexylethyl, aryl radicals, such as phenyl, tolyl, xylyl, aralkyl radicals, such as benzyl and 2-phenylethyl. Preferable monovalent halohydrocarbon radicals have the formula $C_nF_{2n+1}CH_2CH_2$- wherein n has a value of from 1 to 10, such as, for example, $CF_3CH_2CH_2$-, $C_4F_9CH_2CH_2$-, $C_6F_{13}CH_2CH_2$-, $C_2F_5$-O($CF_2$-$CF_2$-O)$_{1-10}$$CF_2$-, F [CF($CF_3$)-$CF_2$-O]$_{1-5}$-($CF_2$)$_{0-2}$-, $C_3F_7$-OCF($CF_3$)- and $C_3F_7$-OCF($CF_3$)-$CF_2$-OCF($CF_3$)-. Preferred groups for R are methyl, phenyl, 3,3,3-trifluoropropyl, particular preferred is methyl.

$R^1$ represents an organic group, which is bound to the silicon atom via a carbon atom, comprising at least one, preferably one acid anhydride group. Basically groups $R^1$ are thus derived from organic groups R which carry an acid anhydride group, e.g. hydrocarbyl groups with up to 30 carbon atoms, which carry an acid anhydride group.

An acid anhydride group in the present invention is a functional group of the formula:

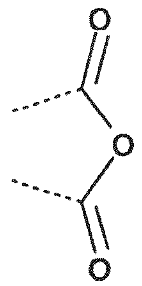

wherein the dotted lines are free valencies attached to an organic moiety bound to the silicon atom.

Preferably the functional polyorganosiloxane according to claim 1 consists of the siloxy units of the formula (I). Preferably the functional polyorganosiloxanes according to the invention comprises at least 3, preferably at least 5, more preferably at least 10 siloxy units of the formula (I). More preferably the functional polyorganosiloxanes according to the invention consist of 3 to 200, preferably 10 to 100 siloxy units of the formula (I).

The functional polyorganosiloxanes comprise siloxy units sected from the group consisting of:

M: $R_3SiO_{1/2}$
D: $R_2SiO_{2/2}$
$D^H$: $R(H)SiO_{2/2}$
$M^H$: $R_2(H)SiO_{1/2}$
M*: $R_2R^1SiO_{1/2}$
D*: $RR^1SiO_{2/2}$
T: $RSiO_{3/2}$
T*: $R^1SiO_{3/2}$
$T^H$: $HSiO_{3/2}$
Q: $SiO_{4/2}$
wherein
R represents an organic group, which does not comprise an acid anhydride group, as described above,
$R^1$ represents an organic group, as described above, comprising at least one, preferably one acid anhydride group, with the proviso that the polysiloxane comprises at least one siloxy group M*, at least one group $D^H$, and at least one group D.

In a preferred embodiment of the invention the functional polysiloxane has a molar content of the total of T, $T^H$, T* and Q units, as defined above, of less than 5 mol-%, preferably less than 2 mol-% based on the total amount of siloxy units. Still more preferred the functional polysiloxane does not contain T, $T^H$, T* and Q units, but preferably consists of the units:

M: $R_3SiO_{1/2}$
D: $R_2SiO_{2/2}$
$D^H$: $R(H)SiO_{2/2}$
$M^H$: $R_2(H)SiO_{1/2}$
M*: $R_2R^1SiO_{1/2}$ and
D*: $RR^1SiO_{2/2}$.

A particularly preferred functional polyorganosiloxane of the invention is selected from linear polysiloxanes, having the formulae (II):

$M^tD_xD^H_yD^*_zM^t$ (II)

and mixtures thereof,

wherein $M^t$ is selected from the group consisting of M, $M^H$ and M*, wherein M, $M^H$ and M*, D, M*, $D^H$, and D* are each as defined above,
x is an average number of ≥ 1, preferably ≥ 2; more preferably ≥ 5,
y is an average number of Z 1, preferably ≥ 2; more preferably ≥ 5,
z is an average number of ≥ 0, and
the groups D, $D^H$, D* may be arranged in any order,
with the proviso that there is at least one group M*.

Preferably x + y + z = 2 to 200, more preferably x + y + z = 3 to 100.
In a further preferred embodiment in the functional polyorganosiloxane according to the invention the molar ratio of $D/D^H$ is about 1:99 to about 99:1, preferably about 5:95 to about 95:5, more preferably about 10:90 to about 90:10, more preferably about 20:80 to about 80:20, more preferably about 30:70 to about 70:30, more preferably about 40:60 to about 60:40, wherein D and $D^H$ are as defined above.
In a further preferred embodiment of the invention the functional polyorganosiloxane comprises at least one group selected from $M^H$ ($R_2(H)SiO_{1/2}$).
The functional polyorganosiloxane comprises at least one group selected from M* ($R_2R^1SiO_{1/2}$).
The functional polyorganosiloxanes according to the invention preferably comprise at least 3, preferably at least 5, more preferably at least 8, still more preferably at least 10 siloxy units. Preferably the upper limit of the number of siloxy units in the functional polyorganosiloxanes according to the invention is 200, preferably 100.
In the functional polyorganosiloxanes according to the invention the at least one acid anhydride group, in the organic group bound to a silicon atom via a carbon atom comprising at least one acid anhydride group, is selected from the following structures:

- a succinic anhydride moiety of the formula:

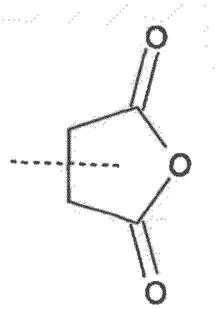

- a maleic anhydride moiety of the formula:

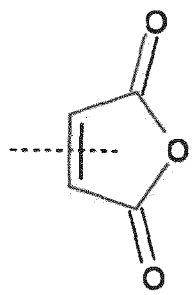

- a glutaric anhydride moiety of the formula:

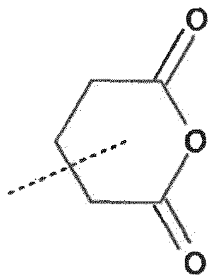

- a phthalic anhydride moiety of the formula:

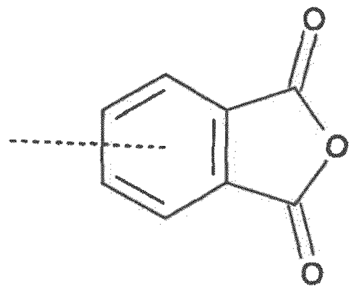

,

- a non-cyclic anhydride moiety of the formula,

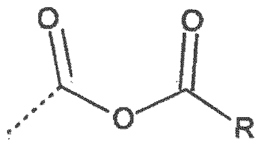

wherein the dotted lines in the above formulas are each a single bond to the remaining part of the organic group that links to the silicon atom via a carbon atom, or as the case may be may also represent a direct bond to the silicon atom, and R is an organic group as defined above, preferably an alkyl group as defined above.

The functional polyorganosiloxanes according to the invention are preferably prepared by the hydrosilylation reaction of an unsaturated anhydride with an SiH-functional siloxy group of a polysiloxane. It is well known to the skilled person in the art that the hydrosilylation reaction is catalysed in particular with transition metal catalysts such as platinum-based catalysts, preferably Pt supported on silica as described in as described in US 9,993,812 B2.

Other hydrosilylation catalysts may be selected from the group of organo metal compounds, salts or metals, having the ability to catalyze hydrosilylation wherein the metal is selected from the group of Mn, Fe, Co, Ni, Ir, Rh, Ru, Os, Pd and Pt compounds as taught in US 3,159,601; US 3,159,662; US 3,419,593; US 3,715,334; US 3,775,452, US 3,814,730, US 20130158281 A1, WO 2013090548 A1, WO 2011006049 A1, US 20110009573 A1, WO 2011006044 A2, US 20110009565 A1, US 9,387,468, US20180015449, US 20180201634, US 9,890,182 and US 9,371,339.

Most preferred are platinum compounds. The hydrosilylation catalyst is a catalyst compound, which facilitates the reaction of the silicon-bonded hydrogen atoms of the starting SiH-functional polysiloxane with the unsaturated anhydride. The metal or organo metal compound is generally based on a platinum group metal. The catalyst includes for example complexes with sigma- and pi-bonded carbon ligands as well as ligands with S-, N, or P atoms, metal colloids or salts of the afore mentioned metals. The catalyst can be present on a carrier such as silicon dioxide or silica gel or powdered charcoal, bearing the metal, or a compound or a complex of that metal. Preferably, the catalyst is any platinum complex compound. A typical platinum containing catalyst is any form of platinum (0), (II) or (IV) compounds, which are able to form complexes. Preferred complexes are Pt-$^{(0)}$-alkenyl complexes, such alkenyl, cycloalkenyl, alkenylsiloxane such vinylsiloxane, because of its easy dispersibility in polyorganosiloxane compositons. A particularly useful form of the platinum complexes are the Pt$^{(0)}$-complexes with aliphatically unsaturated organosilicone compound such as a 1,3-divinyltetramethyldisiloxane (Vinyl-$M_2$ or Karstedt catalyst:

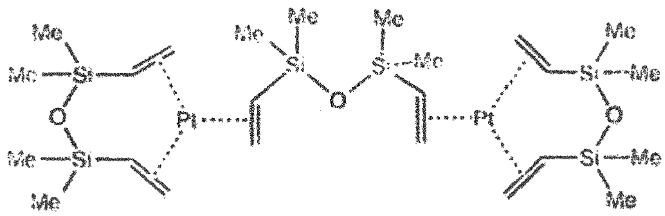),

as disclosed by e.g. US 3,419,593 which is incorporated herein by reference are especially preferred, cyclohexene-Pt, cyclooctadiene-Pt and tetravinyltetramethyl-tetracyclosiloxane (Vinyl-D4)-Pt, e.g. Ashby's catalyst, a Pt(0) complex in tetramethyltetravinylcyclotetrasiloxane with the empirical formula $Pt[(C_3H_6SiO)_4]_x$. Also preferably is a so-called Lamoreaux catalyst, which is a platinum (II) complex compound, obtained from chloroplatinic acid hexahydrate and octyl alcohol (as described for example in US 3,197,432 or US 3,220,972, which are each incorporated by reference in its entirety). Preferably are Pt(0) or Pt(II) catalysts, with preference to Ashby and Lamoreaux platinum catalysts. Particularly preferred is Pt supported on silica as described in US 9,993,812 B2. The amount of platinum-containing catalyst component that is used to catalyze reaction of the unsaturated anhydride with an SiH-functional siloxy group of a starting polysiloxane is not narrowly limited as long as there is a sufficient amount to accelerate the hydrosilylation at the desired temperature. The exact necessary amount of said catalyst component will depend upon the particular catalyst. Generally the amount of platinum containing catalyst components to be applied is preferably sufficient to provide from about 1 to about 200 ppm preferably about 2 to about 100 ppm, especially preferred about 4 to about 60 ppm by weight platinum per weight of the SiH-functional starting polysiloxane.

Examples of the unsaturated anhydride compounds include (in brackets IUPAC names):

- allyl succinic acid anhydride (3-allyltetrahydrofuran-2,5-dione):

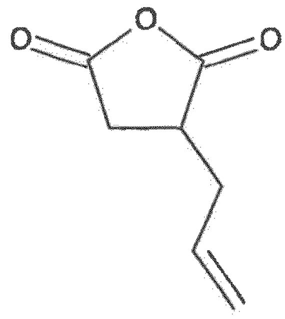

;

- 2-buten-1-ylsuccinic anhydride (3-[(Z) or (E)-but-2-enyl]tetrahydrofuran-2,5-dione):

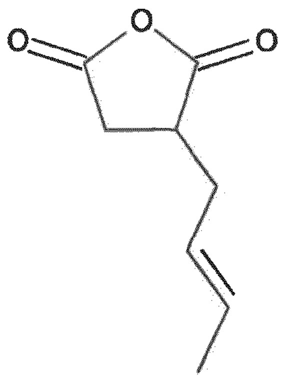

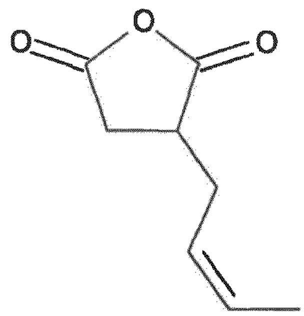

;

- 3-(2-methylallyl)succinic anhydride (3-(2-methylallyl)tetrahydrofuran-2,5-dione)

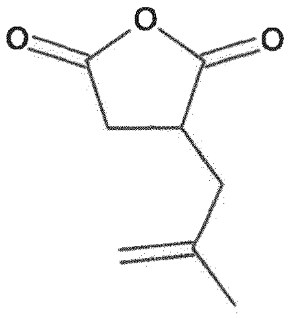

;

- (1-propenyl)succinic anhydride (3-[(E) or (Z)-prop-1-enyl]tetrahydrofuran-2,5-dione):

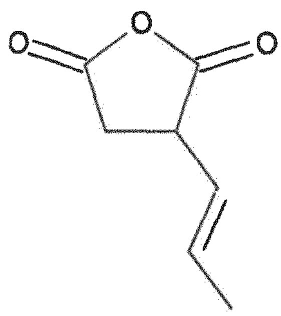

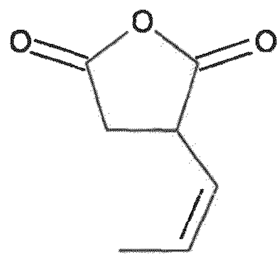

;

- 3-(1,9-decadien-1-yl)dihydro-2,5-furandione (3-[(1E) or (1Z)-deca-1,9-dienyl]tetrahydrofuran-2,5-dione):

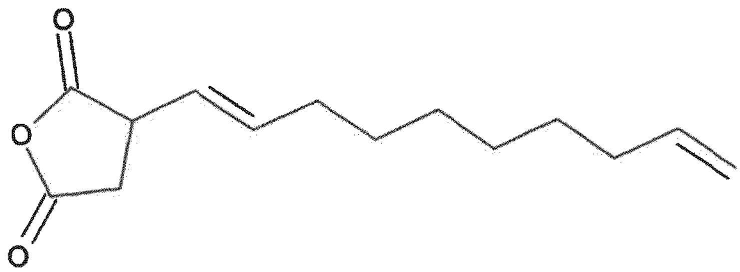

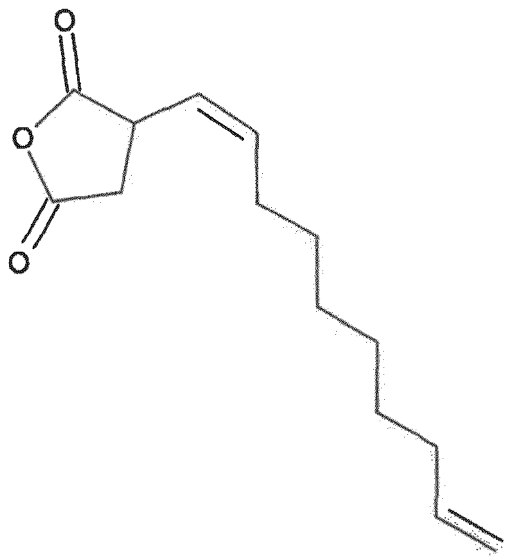

- 3-(hexadec-1-enyl)oxolane-2,5-dione (3-[(E) or (Z)-hexadec-1-enyl]tetrahydrofuran-2,5-dione):

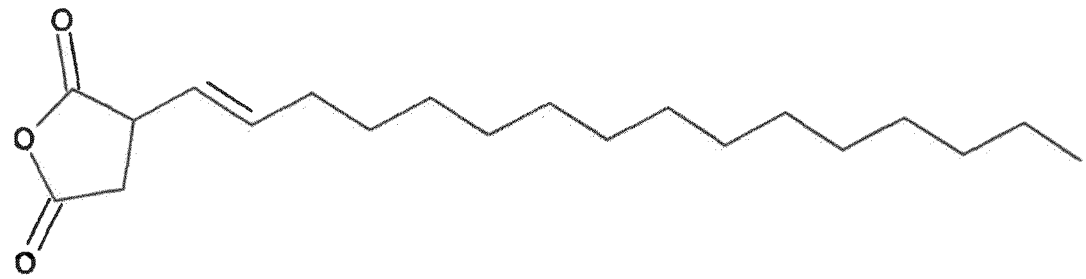

or the (Z)-isomer thereof;

- dihydro-3-(3-octen-1-yl)-2,5-furandione (3-[(E)-oct-3-enyl]tetrahydrofuran-2,5-dione):

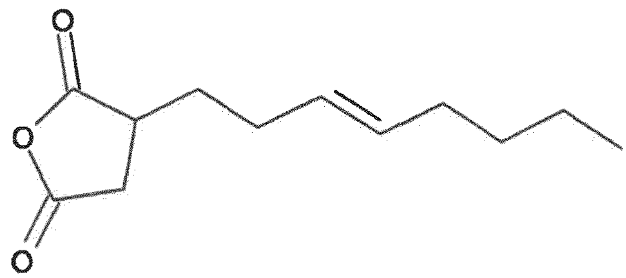

or the (Z)-isomer thereof;

- 2-octadecenylsuccinic anhydride (3-[(E)-octadec-2-enyl]tetrahydrofuran-2,5-dione):

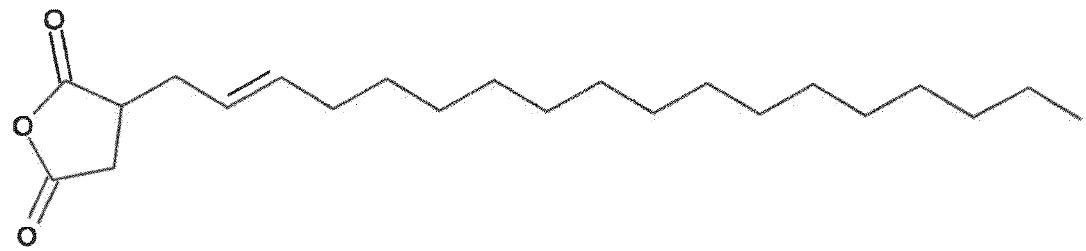

or the (Z)-isomer thereof;

- 3-methyl-4-pent-3-enyloxolane-2,5-dione (3-methyl-4-[(E)-pent-3-enyl]tetrahydrofuran-2,5-dione):

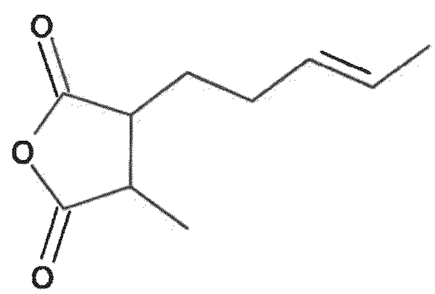

or the (Z)-isomer thereof;

- dihydro-3-(2-methylenebutyl)-2,5-furandione (3-(2-methylenebutyl)tetrahydrofuran-2,5-dione):

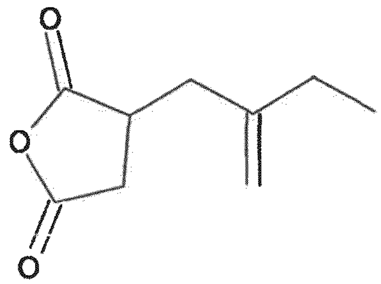

;

- dihydro-3-(1,1,2-trimethyl-2-propen-1-yl)-2,5-furandione (3-(1,1,2-trimethylallyl)tetrahydrofuran-2,5-dione):

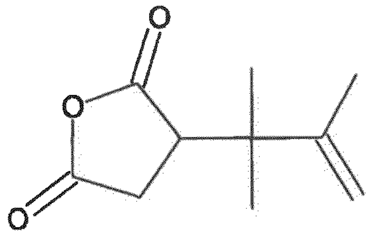

;

- 3-(1,2-dimethyl-2-propen-1-yl)dihydro-2,5-furandione (3-(1,2-dimethylallyl)tetrahydrofuran-2,5-dione):

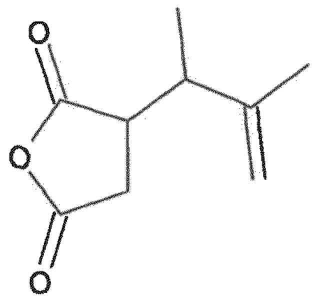

;

- 3-hex-4-en-2-yloxolane-2,5-dione (3-[(E)-1-methylpent-3-enyl]tetrahydrofuran-2,5-dione):

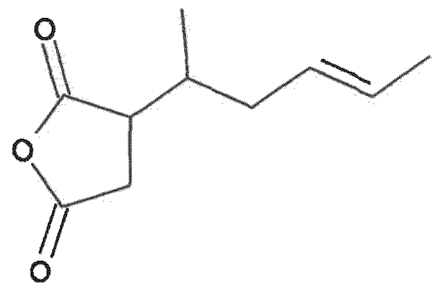

or the (Z)-isomer thereof;
- 2-hexen-1-yl succinic anhydride (3-[(E)-hex-2-enyl]tetrahydrofuran-2,5-dione):

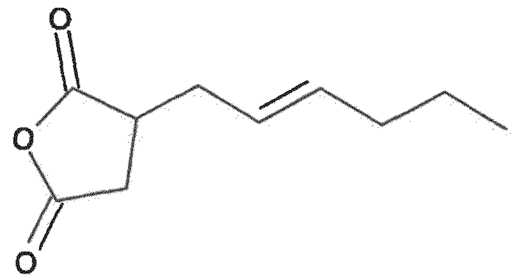

or the (Z)-isomer thereof;

- 3-pent-2-enyloxolane-2,5-dione (3-[(E)-pent-2-enyl]tetrahydrofuran-2,5-dione):

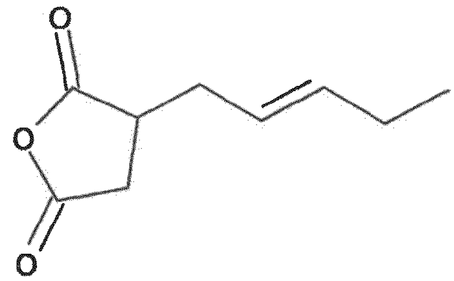

or the (Z)-isomer thereof;

- 1-octenylsuccinic anhydride (3-[(E)-oct-1-enyl]tetrahydrofuran-2,5-dione):

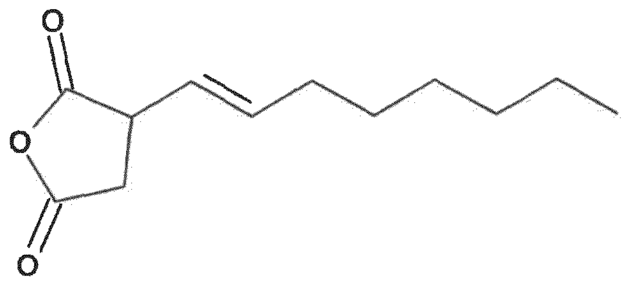

or the (Z)-isomer thereof;

- 2-octenylsuccinic anhydride (3-[(E)-oct-2-enyl]tetrahydrofuran-2,5-dione):

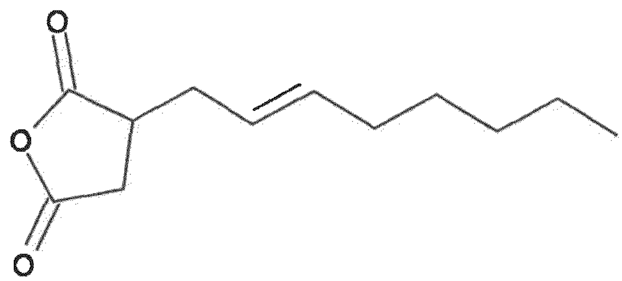

or the (Z)-isomer thereof;

- 3-(2-neopentylallyl)tetrahydrofuran-2,5-dione:

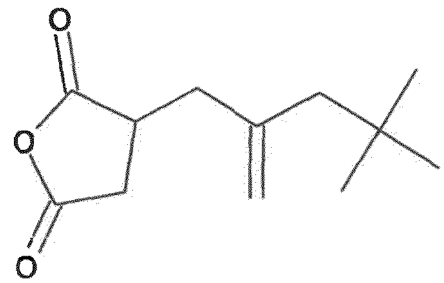

;

- maleic anhydride:

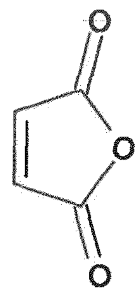

;

- 4-cyclohexene-1,2-dicarboxylic acid anhydride:

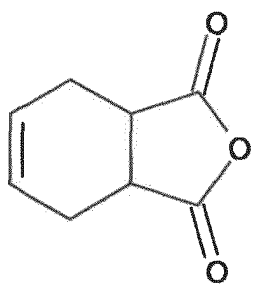

;

- 2-norbornene-5,6-dicarboxylic anhydride:

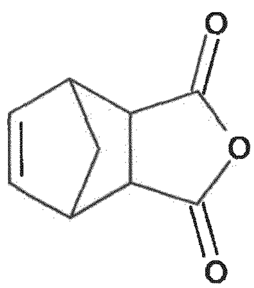

;

- methyl-5-norbornene-2,3-dicarboxylic anhydride:

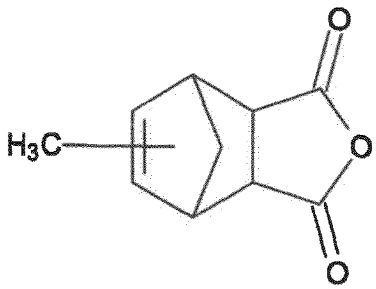

;

- 3-methyl-4-cyclohexene-1,2-dicarboxylic acid anhydride:

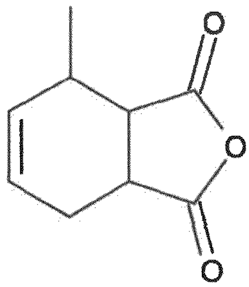

;

- 3,6-epoxy-1,2,3,6-tetrahydrophthalic anhydride:

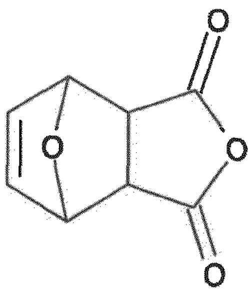

;

- 1-methyltetrahydrophthalic anhydride:

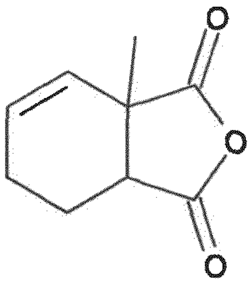

;

- 4-ethenyl-3a,4,7,7a-tetrahydro-1,3-isobenzofurandione:

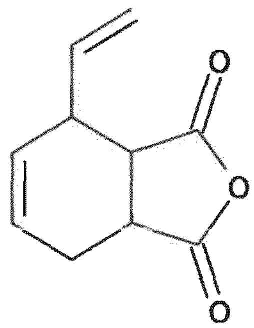

;

- bicyclo[2.2,2]oct-7-ene-2,3,5,6-tetracarboxylic dianhydride:

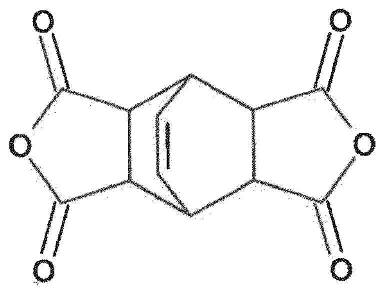

;

- 4-methyl-3a, 4,7,7a-tetrahydro-4,7-epoxy-2-benzofuran-1, 3-dione:

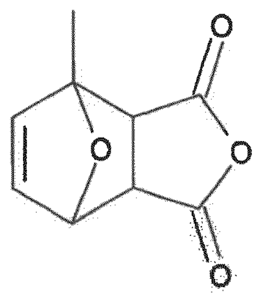

;

- 5-methyl-4-(3-methylbut-2-enyl)-3a,4,7,7a-tetrahydro-2-benzofuran-1,3-dione:

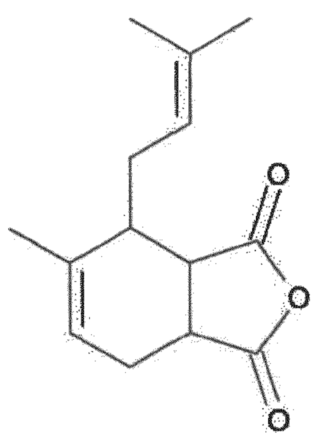

;

- 1,4,5,8,7-hexachloro-5-norbornene-2,3-dicarboxylic acid anhydride:

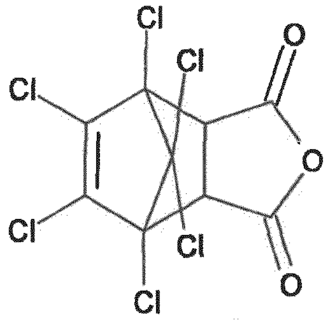

;

and

- Carboxyl but-3-enoates of the formula:

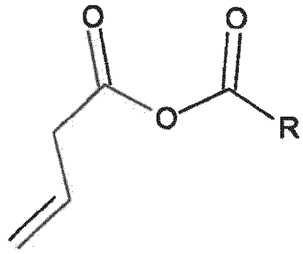

such as acetyl but-3-enoate:

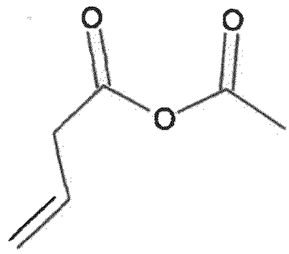

In the preferred embodiment of the invention the functional polyorganosiloxane carries at least one succinic anhydride moiety of the formula:

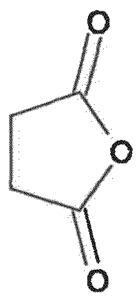

which moiety can be mono- or divalent and can be bound to a silicon atom with a single bond or a di- or trivalent organic group, preferably the succinic anhydride moiety is monovalent, and is bound via a divalent organic group to a silicon atom of the functional polysiloxane.

The functional polyorganosiloxanes according to the invention are normally used in curable compositions, where they form an anchorage additive, which improves the adhesion to a substrate to which the curable compositions are applied to.

Preferred curable compositions according to the invention, comprise:

(A) at least one polyorganosiloxane having at least two unsaturated hydrocarbyl residues,
(B) at least one polyorganohydrogensiloxane,
(C) at least one hydrosilylation catalyst, comprising a transition metal,
(D) at least one functional polysiloxane as defined above,
(E) optionally one or more filler,
(F) optionally one or more auxiliary additives.

It should be noted that components (A), (B) and (D) are separate, different polyorganosiloxanes.

Component (A)

Component (A) may include one or more polyorganosiloxanes having in average at least two alkenyl groups. Suitable components (A) can be described by the general formula (1),

$$[M^2_a D^2_b T^2_c Q^2_d Z_e]_m \qquad (1)$$

wherein the indices in formula (1) represent the ratios of the siloxy units $M^2$, $D^2$, $T^2$ and $Q^2$, which can be distributed blockwise or randomly in the polysiloxane. Within such polysiloxane each siloxane unit can be identical or different and preferably

$$a = 0 - 10$$

$$b = 0 - 2000$$

$$c = 0 - 50$$

$$d = 0 - 10$$

$$e = 0 - 300$$

$$m = 1 – 1000$$

$$a + b + c + d + e \geq 2,$$

and

$M^2 = R_3SiO_{1/2}$, or $M^{2*}$

$D^2 = R_2SiO_{2/2}$, or $D^{2*}$

$T^2 = RSiO_{3/2}$, or $T^{2*}$

$Q^2 = SiO_{4/2}$,

Z is a divalent optionally substituted hydrocarbyl bridging group with up to 14 carbon atoms between two siloxy groups as defined before,
wherein R is an organic group as defined above and is preferably selected from optionally substituted hydrocarbyl groups with up to 30 carbon atoms and poly($C_2$-$C_4$)-alkylene ether groups with up to 1000 alkylene oxy units, the groups R being free of aliphatic unsaturation, and wherein

$M^{2*} = R^2_pR_{3-p}SiO_{1/2}$,

$D^{2*} = R^2_qR_{2-q}SiO_{2/2}$,

$T^{2*} = R^2SiO_{3/2}$,

wherein

$$p = 1 - 3,$$

$$q = 1 - 2,$$

and

$R^2$ is selected from unsaturated optionally substituted hydrocarbyl groups with up to 30 carbon atoms, the unsaturated optionally substituted hydrocarbyl being preferably alkenyl groups,
with the proviso that there are at least two groups selected from $M^{2*}$, $D^{2*}$ and $T^{2*}$.

Preferably a, b, c, d and m being such that the viscosity of component (A) at 25 °C is less than 100000 mPa.s (measured at a shear rate of D=10 $s^{-1}$ at 25 °C).
The viscosity of component (A) refers to the viscosity of a single component (A) or a mixture of components (A). The latter case of the mixture includes with it the presence of individual components (A) that may have a viscosity exceeding 100000 mPa.s at 25° C, for example resinous components (A) that comprise Q and or T units.
In formula (1) the indices should suitably represent the average polymerisation degree $P_n$ based on the average number molecular mass $M_n$.
In the formula (1):

$M^2 = R_3SiO_{1/2}$, or $M^{2*}$

$D^2 = R_2SiO_{2/2}$, or $D^{2*}$

$T^2 = RSiO_{3/2}$, or $T^{2*}$

$Q = SiO_{4/2}$,

divalent Z, which are bridging groups between siloxy groups above,

wherein each R is an organic group as defined above and which may be the same or different, and is preferably selected from optionally substituted alkyl with up to 30 carbon atoms, optionally substituted aryl with up to 30 carbon atoms, poly($C_2$-$C_4$)-alkylene ether with up to 1000 alkylene oxy units, the groups R here being free of aliphatic unsaturation, and
wherein $M^{2*} = R^2{}_pR_{3-p}SiO_{1/2}$, $D^{2*} = R^2{}_qR_{2-q}SiO_{2/2}$, $T^{2*} = R^2SiO_{3/2}$,
wherein
p= 0-3, preferably 1-3,

$$q = 1-2,$$

and

Z is as defined below.
R is an organic group as defined above, and is preferably selected from n-, iso, or tertiary alkyl, alkoxyalkyl, $C_3$-$C_{30}$-cyclic alkyl, or $C_6$-$C_{30}$-aryl, alkylaryl, which groups can be substituted in addition by one or more O-, N-, S- or F-atom, or poly($C_2$ -$C_4$)-alkylene ethers with up to 500 alkylene oxy units, the groups R being free of aliphatic unsaturation,

Examples of suitable monovalent hydrocarbon radicals include alkyl radicals, preferably such as $CH_3$-, $CH_3CH_2$-, $(CH_3)_2CH$-, $C_8H_{17}$- and $C_{10}H_{21}$-, and cycloaliphatic radicals, such as cyclohexylethyl, aryl radicals, such as phenyl, tolyl, xylyl, aralkyl radicals, such as benzyl and 2-phenylethyl. Preferable monovalent halohydrocarbon radicals have the formula $C_nF_{2n+1}CH_2CH_2$- wherein n has a value of from 1 to 10, such as, for example, $CF_3CH_2CH_2$-, $C_4F_9CH_2CH_2$-, $C_6F_{13}CH_2CH_2$-, $C_2F_5$-$O(CF_2$-$CF_2$-$O)_{1-10}CF_2$-, $F[CF(CF_3)$-$CF_2$-$O]_{1-5}$-$(CF_2)_{0-2}$-, $C_3F_7$-$OCF(CF_3)$- and $C_3F_7$-$OCF(CF_3)$-$CF_2$-$OCF(CF_3)$-. Preferred groups for R are methyl, phenyl, 3,3,3-trifluoropropyl, particular preferred is methyl.

$R^2$ is selected from aliphatic unsaturated groups, comprising C=C-group-containing groups (alkenyl groups), e.g.: n-, iso-, tertiary or cyclic alkenyl, $C_6$-$C_{30}$-cycloalkenyl, $C_8$-$C_{30}$-alkenylaryl, cycloalkenylalkyl, vinyl, allyl, methallyl, 3-butenyl, 5-hexenyl, 7-octenyl, ethyliden-norbornyl, styryl, vinylphenylethyl, norbornenyl-ethyl, limonenyl, optionally substituted by one or more O- or F-atoms, or C≡C-group-containing groups (alkinyl groups), optionally comprising one or more O- or F-atoms.

The alkenyl radicals are preferably attached to terminal silicon atoms, the olefin function is at the end of the alkenyl group of the higher alkenyl radicals, because of the more ready availability of the alpha-, omega-dienes used to prepare the alkenylsiloxanes.

Preferred groups for $R^2$ are vinyl, 5-hexenyl, cyclohexenyl, limonyl, styryl, vinylphenylethyl. Most preferred group $R^2$ is a vinyl.

Z includes for example divalent aliphatic or aromatic n-, iso-, tertiary- or cyclo-alkylene with up to 14 carbon atoms, arylene or alkylenearyl groups. Z forms bridging elements between two siloxy units. The content of the Z groups does not exceed 30 mol.% preferably not exceed 20 mol.% of all siloxy units. Preferably Z is absent. Preferred examples of suitable divalent hydrocarbon groups Z include any alkylene residue, preferably such as $-CH_2-$, $-CH_2CH_2-$, $-CH_2(CH_3)CH-$, $-(CH_2)_4-$, $-CH_2CH(CH_3)CH_2-$, $-(CH_2)_6-$, $-(CH_2)_8-$ and $-(CH_2)_{18}-$; cycloalkylene radical, such as cyclohexylene; arylene radicals, such as phenylene, xylene and combinations of hydrocarbon radicals, such as benzylene, i.e. $-CH_2CH_2-C_6H_4-CH_2CH_2-$, $-C_6H_4CH_2-$. Preferred groups are alpha, omega-ethylene, alpha, omega-hexylene or 1,4-phenylene. Further examples include divalent halohydrocarbon radicals Z e.g. any divalent hydrocarbon group Z wherein one or more hydrogen atoms have been replaced by halogen, such as fluorine, chlorine or bromine. Preferable divalent halohydrocarbon residues have the formula $-CH_2CH_2(CF_2)_{1-10}CH_2CH_2-$ such as for example, $-CH_2CH_2CF_2CF_2CH_2CH_2-$ or other examples of suitable divalent hydrocarbon ether radicals and halohydrocarbon ether radicals including $-CH_2CH_2OCH_2CH_2-$, $-C_6H_4-O-C_6H_4-$, $-CH_2CH_2CF_2OCF_2CH_2CH_2-$, and $-CH_2CH_2OCH_2CH_2CH_2-$.

Such polymers as component (A) containing R, $R^2$ and optionally Z radicals preferably are e.g. alkenyl-dimethylsiloxy or trimethylsiloxy terminated polydimethylsiloxanes, which can contain other siloxane units in the chain, like for example alkenylmethylsiloxy groups, diphenylsiloxy groups. forming e.g. poly(dimethyl-co-diphenyl)siloxane chains that are terminated with dimethylsiloxy or trimethylsiloxy groups.

Broadly stated component (A) of the curable compositions of this invention can be any polyorganosiloxane compound containing two or more silicon atoms linked by oxygen and/or divalent groups Z wherein the silicon is bonded to 0 to 3 monovalent groups per silicon atom, with the proviso that the polyorganosiloxane compound contains at least two silicon-bonded unsaturated hydrocarbon residues.

The siloxane units with radicals R and/or $R^2$ can be equal or different for each silicon atom. In a preferred embodiment, the structure of the component (A) of the curable compositions of this invention is

$$R^2_pR_{3-p}SiO[R_2SiO]_{m1}[R^2RSiO]_nSiR^2_pR_{3-p}$$

wherein R and $R^2$ are as defined above,

p = 0 - 3, preferably 1,
m1 = 10 - 2000, preferably 100-1000,
n = 0- 500 preferably 0-200, which the proviso, that there are at least two groups $R^2$.

One preferred polyorganosiloxane component (A) for the composition of this invention is a substantially linear polyorganosiloxane (A1). The expression "substantially linear" includes polyorganosiloxanes (A1) that contain not more than 0.2 mol.% (trace amounts) of siloxy units of the type T or Q. This means the polymer (A) is preferably a linear, preferably flowable fluid (A1):

$$R^2_pR_{3-p}SiO(R_2SiO)_{m1}SiR_{3-p}R_p^2 \qquad (1a)$$

wherein $R^2$, R, p and m1 are as defined above, with the proviso, that there are at least two alkenyl groups per molecule. Further preferred structures of component (A) include

$$Vi_pMe_{3-p}SiO(Me_2SiO)_{10-2000}\,SiMe_{3-p}\,Vi_p \qquad (1b)$$

$$PhMeViSiO(Me_2SiO)_{10-2000}\,SiPhMeVi \qquad (1c),$$

(Vi = Vinyl; Ph = Phenyl, Me = Methyl).

In the group of alkenyl comprising siloxanes (A) the addition of a second or third siloxane as component (A2) and/or (A3) is preferred. The purpose of component (A2) and (A3) so-called vinyl rich polymers is to modify the mechanical

properties and crosslinking density of the cured compositions.

The polymers (A2) are selected either from the group consisting of polymers of the formulas (1d) to (1i), i.e. linear polyorganosiloxanes having additional alkenyl side groups wherein the concentration of T- and Q-groups are below 0.2 mol.% or polyorganosiloxanes having a higher concentration of T- and Q-groups than the previous polymer types (A1) or (A2).

The polymers (A2) are preferably represented by the formulas (1d to 1f):

$$R^2{}_pR_{3-p}(R_2SiO)_{b1}(R^2R\ SiO)_{b1x}SiR_{3-p}R_p{}^2 \quad (1d)$$

$$Me_3SiO(Me_2SiO)_{b1}(MeR^2SiO)_{b1x}SiMe_3 \quad (1e),$$

$$R^2Me_2SiO(Me_2SiO)_{b1}(MeR^2SiO)_{b1x}SiMe_2R^2 \quad (1f),$$

whereby

$$b1 = > 0 - 2000$$

$$b1x = > 0 - 500$$

$$b1 + b1x = > 10 - 100$$

$R^2$, R, p are as defined above,

$R^2$ = preferably vinyl, hexenyl, cyclohexenyl, limonyl, styryl, vinylphenylethyl. Most preferred $R^2$ is vinyl.

Preferred groups for R are methyl, phenyl, 3,3,3-trifluoropropyl, most preferred is methyl.

The preferred value of b1x is less than 0.5*b1, preferably 0.0001*b1 to 0.25*b1 more preferably 0.0015*b1 to 0.2*b1.

Further preferred structures of (A2) are

$$Vi_pMe_{3-p}SiO(Me_2SiO)_{10-2000}\ (MeViSiO)_{1-1000}\ SiMe_{3-p}\ Vi_p \quad (1g),$$

$$Me_3SiO(Me_2SiO)_{10-2000}\ (MeViSiO)_{1-1000}SiMe_3 \quad (1h),$$

$$PhMeViSiO(Me_2SiO)_{10-2000}\ (MePhSiO)_{1-1000}SiPhMeVi \quad (1i)$$

and wherein Me= methyl, Vi= vinyl, Ph= phenyl, and p= 0 to 3, preferred p=1.

In a preferred embodiment component (A) is a mixture of component (A1) and (A2), more preferred mixture of:

$$R^2{}_pR_{3-p}SiO(R_2SiO)_{m1}SiR_{3-p}R_p{}^2 \quad (1a)$$

and

$$R^2{}_pR_{3-p}(R_2SiO)_{b1}(R^2R\ SiO)_{b1x}SiR_{3-p}R_p{}^2 \quad (1d)$$

wherein R, $R^2$, p, q, m1, b1 and b1x are as defined above, and R is preferably methyl and $R^2$ is preferably vinyl.

The third preferably optionally used component of polymer (A), includes branched polymers (A3), which are preferably selected from those of the formula (4a) wherein the polyorganosiloxane (A3) comprising alkenyl groups have more than 0.2 mol.% of $T^2=RSiO_{3/2}$ or $Q^2=SiO_{4/2}$-units.

$$[M^2{}_{0.4-4}D^2{}_{0-100}T^2{}_{0-50}Q^2{}_{0-10}]_{1-1000} \quad (4a)$$

whereby

$$M^2 = R_3SiO_{1/2}, \text{ or } M^{2*}$$

$$D^2 = R_2SiO_{2/2}, \text{ or } D^{2*}$$

$$T^2 = RSiO_{3/2},$$

or $T^{2*}$

$$Q^2=SiO_{4/2},$$

wherein R is as defined above, and
wherein $M^{2*}$, $D^{2*}$ and $T^{2*}$ are as defined above, carrying unsaturated groups $R^2$. The amount of such $M^{2*}$, $D^{2*}$ and $T^{2*}$ units is preferably 0.001 to 20 mol.%, more preferably 0.01 to 15 mol.%, most preferably 0.1 to 10 mol.% based on all siloxy units.

A preferred branched polymer (A3) includes silicone resins comprising at least one branching unit ($T^2=RSiO_{3/2}$, or $T^{2*}$, $Q^2=SiO_{4/2}$), which are favorable inter alia to impart strength to the composition such as tensile strength and concurrently to increase the hardness thereof. More illustratively, the silicone resin contain $M^2= R_3SiO_{1/2}$, or $M^{2*}$, and at least one unit selected from $T^2= RSiO_{3/2}$, $T^{2*}$ and $Q^2=SiO_{4/2}$, and optionally contains $D^2$ units selected from $D^2= R_2SiO_{2/2}$, or D2*.
The molar ratio of $M^2$ unit to $T^2$ and $Q^2$ units if combined preferably is:
$M^2/(Q^2 + T^2)$ = 0.6 to 1.2, preferably 0.7 to 1.1.
The silicone resin may be synthesized, for example, by hydrolyzing the suitable alkoxysilanes or chlorosilanes in such a ratio as to meet the above-mentioned composition.
A preferred embodiment of the addition-curable silicone rubber composition comprises at least one polyorganosiloxane selected from (A1) and (A2), and at least one polyorganosiloxane selected from (A3).
The range of the subindices defines a range of the possible average polymerization degrees $P_n$ according to the number average molecular weight $M_n$.
The indices correspond to suitable viscosities as defined later on and describe polymers without any solvent for a viscosity adjustment.
The preferred branched polyorganosiloxanes (A2) and (A3) have usually a higher concentration of unsaturated groups $R^2$. Branched polymers (A3) are described e.g. in US 5,109,095, which is incorporated by reference in its entirety. Preferably the branched vinyl-rich polymers (A3) have a range of $D^2 : T^2 > 10 : 1$ preferably > 33 : 1 and/or respectively ($M^2$ : $Q^2$) = 0.6 - 4 : 1, such as e.g. $[M^2_{0.7}M^{2*}_{0.05}Q^2]_{10\text{-}500}$ (1j).
All these polymers can be prepared by any of the conventional methods for preparing triorganosiloxane-terminated polydiorganosiloxanes. For example, a proper ratio of the appropriate hydrolyzable silanes, e.g., vinyldimethylchlorosilane, trimethylchlorsilane, tetrachlorosilane, methyltrichlorsilane and dimethyldichlorosilane, or its corresponding alkoxysilanes, can be co-hydrolyzed and condensed. Other reaction routes may run alternately over equilibration reactions of 1,3-divinyltetraorganodisiloxane, e.g. symmetrical divinyldimethyldiphenylsiloxane or divinyltetramethylsiloxane, which furnishes the endgroups of the polydiorganosiloxane, which may be equilibrated with an appropriate polydiorganosiloxane, e.g., octamethylcyclotetrasiloxane, in the presence of an acidic or basic catalyst.
In a preferred embodiment the polymer component (A) is a mixture of polymers of the formula (1a) and/or of the formula (1d) and/or (1j) whereby the mixture has an alkenyl content in average of preferably below 2 mol.% of all siloxy units of the mixture (A), whereby polymer (A1) is present in a higher amount than (A2) or (A3).
The viscosities of the polydiorganosiloxanes (A) defined above for the purposes of this invention, preferably refer to the polyorganosiloxanes essentially free of cyclic polydiorganosiloxanes (less than 1 wt.%, preferably 0.5 wt.% measured for 1 h 150 °C 20 mbar).
The average polymerization degree $P_n$ of the siloxane units ($M^2$, $D^2$, $T^2$, $Q^2$) of the polymer (A) measured by GPC measurement versus polystyrene standard based on the average number mol weight $M_n$ is preferably in the range of $P_n$ > 10 to 2000, the more preferred range is 40 to 1000. The viscosities of such polymers are preferably in the range of about 10 to about 100,000 mPa.s at 25 °C at a shear rate of D=10 $s^{-1}$, more preferred about 40 to about 70,000 mPa.s.
Preferably the alkenyl content of the component (A) is in the range of about 0.001 to about 20 mol%, especially 0.01 to 10 mol % based on the entire organic groups attached to silicon atoms.
The alkenyl content of the components (A) can be determined here by way of $^1H$ NMR - see A.L. Smith (ed.): The Analytical Chemistry of Silicones, J. Wiley & Sons 1991 Vol. 112 pp. 356 et seq. in Chemical Analysis ed. by J.D. Winefordner.

<u>Component (B) - Crosslinker</u>

Suitable polyorganohydrogensiloxanes (B) comprising SiH units can be described by the general formula (2),

$$[M^1_{a2}D^1_{b2}T^1_{c2}Q_{d2}Z_{e2}]_{m2} \qquad (2)$$

wherein the siloxy units

$M^1 = M^2$, as defined above, or M**,
$D^1 = D^2$, as defined above, or D**,
$T^1 = T^2$, as defined above, or T**,
$Q = Q^2$ as defined above,
Z as defined above,
$M^{**}= HR_2SiO_{1/2}$, $D^{**}= HRSiO_{2/2}$, $T^{**}= HSiO_{3/2}$,
a2 = 0.01-10 preferably = 2-5, most preferably =2,
b2 = 0-1000 preferably = 10-500
c2 = 0-50 preferably= 0
d2 = 0-5 preferably = 0
e2 = 0-3 preferably = 0
m2= 1-1000, preferably =1-500, most preferably =1,

with the proviso that there are at least two groups selected from M**, D** and T**.

Preferably the component (B) is selected from polysiloxanes that have only methyl or phenyl groups, even more preferably only methyl groups as organic residues.

Preferably the polyorganohydrogensiloxanes (B) have at least 10, preferably at least 15, more preferably at least 20, still more preferably at least 25 and most preferably at least 30 silicon atoms.

The siloxy units can be distributed blockwise or randomly in the polymer chain.

The aforementioned indices should represent the average polymerization degree $P_n$ based on the average number molecular mass $M_n$.

The range for $M^1$-, $D^1$-, $T^1$- and $Q^1$-units present in the molecule can cover nearly all values representing fluids, flowable polymers, liquid and solid resins. It is preferred to use liquid linear, cyclic or branched siloxanes. Optionally these siloxanes can comprise additionally traces of $C_1$-$C_6$-alkoxy or Si-hydroxy groups remaining from the synthesis.

Preferred structures of component (B) in the compositions of this invention are siloxanes of formula (2a) to (2e).

$$H_{a1}(R)_{3-a1}Si[RHSiO]_x[R_2SiO]_y[RR^2SiO]_zSi(R)_{3-a1}H_{a1} \quad (2a)$$

more specifically:

$$HR_2SiO(R_2SiO)_y(RR^2SiO)_z(RHSiO)_xSiR_2H \quad (2b)$$

$$HMe_2\,SiO(Me_2SiO)_y(RR^2SiO)_z(MeHSiO)_xSiMe_2H \quad (2c)$$

$$Me_3SiO(MeHSiO)_xSiMe_3 \quad (2d)$$

$$Me_3SiO(Me_2SiO)_y(RR^2SiO)_z(MeHSiO)_xSiMe_3 \quad (2e)$$

wherein R and $R^2$ are as defined above, R is preferably methyl and/or phenyl, $R^2$ is preferably vinyl, and index 'a1' is 0-1, preferably 0, and preferably

x = 2 - 1000, preferably = 2-500,
y = 0 - 650, preferably = 0-100,
z = 0 - 65, preferably = 0
$2 \leq x + y + z < 1000$, preferably $10 \leq x + y + z < 650$.

Most preferred is

$$Me_3SiO(Me_2SiO)_y(RR^2SiO)_z(MeHSiO)_xSiMe_3 \quad (2e)$$

wherein R and $R^2$ are as defined above, with x, y, z as defined before, i.e. z is preferably 0.

Furthermore the use of resinous polyorganohydrogensiloxanes of the following formula are possible:

$$\{[T^1][R^{29}O_{1/2}]_{n2}\}_{m2} \quad (2f)$$

$$\{[SiO_{4/2}][R^{29}O_{1/2}]_{n2}[M^1]_{0,01-10}[T^1]_{0-50}[D^1]_{0-1000}\}m2 \quad (2g)$$

wherein

$T^1$, $M^1$, $D^1$ are as defined above,
n2 = 0 to 3
m2 is as defined above
$R^{29}$ is hydrogen, $C_1$-$C_{25}$-alkyl, such as methyl, ethyl, n-propyl, iso-propyl, n-, iso- and tert.-butyl, alkanoyl, such acyl, aryl, -N=CHR, such as butanonoxime, alkenyl, such as propenyl,

wherein in each formula (2e) - (2f) the molar ratio of SiH-groups to all Si-atoms is preferably more than 0.01 and preferably up to 0.7, and the total number of Si atoms is preferably at least 7, more preferably at least 15 and even more preferably at least 20.

One preferred embodiment of the compounds (2f) is provided by way of example by monomeric to polymeric compounds which can be described via the formula $[(Me_2HSiO_{0.5})_kSiO_{4/2}]_{1,5\text{-}1000}$ wherein index k is from 0.3 to 4. Such liquid or resinous molecules can contain significant concentrations of SiOH- and/or ($C_1$-$C_6$)-alkoxy-Si groups of up to 10 mol.% related to the silicon atoms.

Specific examples of preferred suitable compounds for component (B) in the compositions of this invention include

$Me_3SiO\text{-}(MeHSiO)_{2\text{-}50}\text{-}SiMe_3$,

$Me_3SiO\text{-}(MeHSiO)_{2\text{-}50}(Me_2SiO)_{1\text{-}100}SiMe_3$,

$(MeHSiO)_7$,

$HMe_2SiO\text{-}(MeHSiO)_{0\text{-}60}(Me_2SiO)_{1\text{-}250}SiMe_2H$

$HMe_2SiO(Me_2SiO)_{0\text{-}30}(MePhSiO)_{0\text{-}30}(MeHSiO)_{2\text{-}50}SiMe_2H$,

$Me_3SiO(Me_2SiO)_{0\text{-}30}(MePhSiO)_{0\text{-}30}(MeHSiO)_{2\text{-}50}SiMe_3$,

$Me_3SiO(Me_2SiO)_{0\text{-}30}(Ph_2SiO)_{0\text{-}30}(MeHSiO)_{2\text{-}50}SiMe_3$,

wherein in each formula the molar ratio of SiH-groups to all Si-atoms is preferably more than 0.01 and the total number of Si atoms is preferably at least 7, more preferably have at least 10, more preferably at least 15, most preferably at least 20 atoms.

Most preferred are compounds of the formula $Me_3SiO\text{-}(MeHSiO)_{2\text{-}50}(Me_2SiO)_{0\text{-}100}SiMe_3$, with an SiH-content of at least 0.2 mmol/g, preferably at least 1.5 mmol/g, still more preferably 2 mmol/g.

The component (B) can be used as a single component of one polyorganohydrogensiloxane polymer or mixtures thereof.

If an increase of the cure rate is required, it is preferred to use some organopolysiloxanes (B) having $HMe_2SiO_{0,5}$-units or homo MeHSiO-polymers to adjust the cure rate to shorter times.

If it is necessary to still further increase the cure rate, this can be achieved by way of example via an increase of the molar ratio of SiH to Si-alkenyl, or an increased amount of catalyst (C).

The component (B) has preferably a viscosity at 25 °C from about 2 to about 2000 mPa·s, preferably from about 2 to about 1000 mPa·s, still more preferably about 5 to about 100 mPa·s (preferably measured at a shear rate of $D=10\ s^{-1}$).

Preferably the crosslinker (B) should have at least more than 2, more preferably more than 3, in some instances also more than 15 and more than 20 SiH-groups per molecule.

The molar ratio of the total of SiH groups in component (B) to the total of the unsaturated hydrocarbyl residues $R^1$ in component (A) and if present in (B) in the formulation is between 0.8 and 5, preferably 0.9 to 4, more preferably 1 to 2.5, more preferably 1.1 to 2.2 in order to provide good adhesion to the hydroxyl-group containing substrates.

Component (B) is a compound different from component (D). In particular component (B) does contain an acid anhydride group.

<u>Component (C) - Catalyst</u>

The inventive composition contains at least one hydrosilylation catalyst as component (C) selected from the group of organo metal compounds, salts or metals, having the ability to catalyze hydrosilylation wherein the metal is

selected from the group of Mn, Fe, Co, Ni, Ir, Rh, Ru, Os, Pd and Pt compounds as taught in US 3,159,601; US 3,159,662; US 3,419,593; US 3,715,334; US 3,775,452; US 3,814,730; US 20130158281 A1; WO 2013090548 A1; WO 2011006049 A1; US 20110009573 A1; WO 2011006044 A2; US 20110009565 A1; US 9,387,468; US 20180015449; US 20180201634; US 9,890,182 and US 9,371,339. Most preferred are platinum compounds. The component (C) for the hydrosilylation reaction of the inventive composition is a catalyst compound, which facilitates the reaction of the silicon-bonded hydrogen atoms of component (B) with the silicon-bonded olefinic hydrocarbon substituents of component (A). The metal or organo metal compound is generally based on a platinum group metal. Without wishing to be bound by theory, it is believed that the catalyst (C) includes complexes with sigma- and pi-bonded carbon ligands as well as ligands with S-, N, or P atoms, metal colloids or salts of the afore mentioned metals. The catalyst can be present on a carrier such as silica gel or powdered charcoal, bearing the metal, or a compound or complex of that metal. Preferably, the metal of component (C) is any platinum complex compound.

A typical platinum containing catalyst component in the polyorganosiloxane compositions of this invention is any form of platinum (0), (II) or (IV) compounds, which are able to form complexes. Preferred complexes are Pt-$^{(0)}$-alkenyl complexes, such alkenyl, cycloalkenyl, alkenylsiloxane such vinylsiloxane, because of its easy dispersibility in polyorganosiloxane compositons.

A particularly useful form of the platinum complexes are the Pt$^{(0)}$-complexes with aliphatically unsaturated organosilicone compound such as a 1,3-divinyltetramethyldisiloxane (Vinyl-$M_2$ or Karstedt catalyst:

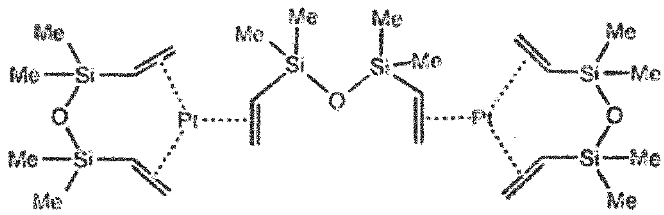

),

as disclosed by e.g. US 3,419,593 incorporated herein by reference are especially preferred, cyclohexene-Pt, cyclooctadiene-Pt and tetravinyltetramethyl-tetracyclosiloxane (Vinyl-$D_4$)-Pt, e.g. Ashby's catalyst, a Pt(0) complex in tetramethyltetravinylcyclotetrasiloxane with the empirical formula $Pt[(C_3H_6SiO)_4]_x$.

Also preferably is a so-called Lamoreaux catalyst, which is a platinum (II) complex compound, obtained from chloroplatinic acid hexahydrate and octyl alcohol (as described for example in US 3,197,432 or US 3,220,972, which are each incorporated by reference herein in its entirety). Preferably are Pt(0) or Pt(II) catalysts, with preference to Ashby and Lamoreaux platinum catalysts.

The amount of platinum-containing catalyst component that is used in the compositions of this invention is not narrowly limited as long as there is a sufficient amount to accelerate the hydrosilylation between (A) and (B) at the desired temperature in the required time (B) in the presence of all other ingredients of the inventive composition. The exact necessary amount of said catalyst component will depend upon the particular catalyst, the amount of other inhibiting compounds and the SiH to olefin ratio and is not easily predictable. However, for platinum catalysts said amount can be as low as possible due to cost reasons. Preferably, one should add more than one part by weight of platinum for every one million parts by weight of the organosilicone components (A) and (B) to ensure curing in the presence of other undefined inhibiting traces. For the compositions of this invention the amount of platinum containing catalyst component to be applied is preferably sufficient to provide from about 1 to about 200 ppm preferably about 2 to about 100 ppm, especially preferred about 4 to about 60 ppm by weight platinum per weight of polyorganosiloxane components (A) plus (B). Preferably, said amount is at least about 4 ppm platinum by weight per sum of (A) and (B).

The curable compositions of the invention can be cured under the assistance of heat or light. Light-curing is then initiated by irradiation with light, in particular UV light having a wavelength maximum between 300 and 550 nm. Irradiation curing is performed preferably at room temperature (25 °C).

Accordingly, the hydrosilylation catalyst can also be selected from the group of catalysts capable of being photoactivated. These photo-activatable catalysts preferably contain at least one metal selected from the group composed of Pt, Pd, Rh, Co, Ni, Ir or Ru. The catalysts capable of being photoactivated preferably comprise platinum compounds. Catalyst capable of being photo-activatable is preferably selected among organometallic compounds, i.e. comprise carbon-containing ligands, or salts thereof. In a preferred embodiment, photoactive catalyst (C) has metal carbon bonds, including sigma- and pi-bonds.

Platinum compounds capable of being photo-activated that can be used are moreover those selected from the group having ligands selected from diketones, e.g. benzoylacetones or acetylenedicarboxylic esters, and platinum catalysts embedded into photodegradable organic resins.

Component (E) - Filler

The addition-curable polyorganosiloxane compositions optionally comprise one or more fillers, preferably reinforcing fillers, if appropriate surface-modified, reinforcing fillers (E). Reinforcing fillers (E) are characterized in particular by a BET surface area of 50 $m^2/g$ or more.

The fillers include by way of example all of the fine-particle fillers, i.e. those having particles smaller than about 100 $\mu m$, i.e. preferably composed of such particles. These can be mineral fillers, such as silicates, carbonates, nitrides, oxides, or silicas. The fillers are preferably those known as reinforcing silicas, which also permit production of elastomers having sufficient transparency for irradiation. Preferred are reinforcing silicas, in particular those increasing the strength. Examples are silicas whose BET surface areas are from about 50 to about 400 $m^2/g$, preferably about 80 to about 350 $m^2/g$, in particular, fumed or precipitated silicas. Preferably these fillers are surface-hydrophobicized. If component (E) is used, its amounts are preferably from about 1 to about 100 parts by weight, more preferably from 0 to about 70 parts by weight, even more preferably from 0 to about 50 parts by weight, even more preferably from about 5 to about 45 parts by weight based on about 100 parts by weight of component (A) and (B).

Fillers whose BET surface areas are above 50 $m^2/g$ permit production of silicone elastomers with improved properties. In view of strength and transparency fumed silicas are preferred, and even more preferred silicas are, for example, Aerosil® 200, 300, HDK@ N20 or T30, Cab-O-Sil® MS7 or HS5 having more than 200 $m^2/g$ BET surface area. As BET surface area rises, the transparency of the silicone mixtures in which these materials are present also rises. Examples of trade names of the materials known as precipitated silicas, or wet silicas, are Vulkasil®VN3, or FK 160 from Evonik (formerly Degussa), or Nipsil®LP from Nippon Silica K.K. and others.

It is preferred to use silica fillers having BET-surface areas of 50 $m^2/g$ or more, preferably having a BET-surface of at least 150 $m^2/g$. Such compositions can be also photo-activated if desired due to sufficient transparency.

The fillers (E) may be subject of any suitable conventional surface-treatment with suitable surface-treatment agents belonging to hydrophobizing treatment with a suitable hydrophobizing agent, dispersing treatment with suitable dispersing agents which influence the interaction of the filler with the silicone polymer, e.g. influence thickening action. The surface treatment of the fillers is preferably a hydrophobation with silanes or with siloxanes. It can by way of example take place in situ via addition of silazanes, such as hexamethyldisilazane and/or 1,3-divinyltetramethyldisilazane, with addition of water, and 'in-situ'-hydrophobation is preferred. It can also take place with other familiar filler-treatment agents with polyorganosiloxanediols whose chain lengths are from 2 to 50 and which bear unsaturated organic radicals, with the aim of providing reactive sites for the crosslinking reaction.

Examples of commercially available silicas pre-hydrophobized with various silanes are: Aerosil® R 972, R 974, R 976, or R 812, or, for example, HDK 2000 or H30 Examples of trade names for materials known as hydrophobized precipitated silicas or wet silicas are e.g. Sipernat D10 or D15 from Evonik (formerly Degussa).

Rheological properties, i.e. technical processing properties, of the non-cured silicone rubber mixtures can be influenced by the selection the amount of the type of the filler, its amount, and the nature of hydrophobization.

The fillers (E) may also comprise all kind of fillers that are different from reinforcing fillers, such as functional fillers for increased heat or electrical conductivity, low surface or inert fillers so-called extenders for extended volume, solvents, natural or synthetic fibers optionally for reinforcement (e.g. polyester fiber, cellulose fiber (cotton fiber), polyamide fiber such as Nylon fiber, polyurethane fiber such as Spandex fiber, glass fiber, etc.).

Examples of materials serving as fillers or extenders (BET-surface areas < 50 $m^2/g$) are known as non-reinforcing fillers. They include for example powdered quartz, diatomaceous earths, powdered crystoballites, micas, aluminum oxides, and aluminum hydroxides. Titanium dioxides or iron oxides, Zn oxides, chalks, or carbon blacks whose BET surface areas are from 0.2 to less than 50 $m^2/g$ can be used also as heat stabilizer. These fillers are available under variety of trade names, examples being Sicron®, Min-U-Sil®, Dicalite®, Crystallite®. The materials known as inert fillers or extenders with BET surface areas below 50 $m^2/g$ should advantageously comprise no particles (< 0.005 % by weight) above 100 $\mu m$ for use in silicone rubbers, in order that further processing generates no problems during downstream processing, e.g. passage through sieves or nozzles, or the mechanical properties of the articles produced therefrom are adversely affected.

Among the opacifying fillers are also in particular non-transparent, in particular inorganic, pigments or carbon black.

The use of these opacifying fillers is preferred only when pigmentation is necessary or the physical function like thermal or electrical conductivity is a requirement.

The use of opaque non-transparent fillers requires changing the usual sequence of the activation and shaping steps in the process. Normally, if no or transparent fillers are used, the photo-activation through irradiation is carried out after the final shaping process. If opaque non-transparent fillers, which would inhibit the photo-activation of the photo-activatable catalyst, are used, the photo-activation step is carried out before the opaque non-transparent fillers are incorporated and the mixture is shaped.

Component (F) - Auxiliary Additives

The addition-curable polyorganosiloxane composition may also comprise one or more auxiliary additives. Such auxiliary additives are suitably conventional additives used in curable polyorganosiloxane compositions.

Such auxiliary additives include for example:

- controlled release additive such as described in US7846550(B2), US3527659, US5308887;
- anti mist additives such as described in US20080281055(A1);
- low coefficient of friction additives such as described in US5942557(A) which uses Tospearl® microspheres;
- antistatic additives such as described in US20090197100A1 and US 9,487,639;
- polyether-based compounds as an antistatic agent;
- metal salts such as lithium salts;
- ionic liquids;
- ion-conductive compounds such as described in JP-A 2005-344102; and
- ionic substances such as described in WO-A1 2009/084730 and WO-A1 2009/084733.

Such auxiliary additives include for example further adhesion promoters, such as those described in WO 2011/107592:

(Compounds (D1)-(D3), e.g. that is,
(D1): at least one organosiloxane, comprising at least one alkoxy silyl group,
(D2): at least one organosilane, comprising at least one alkoxy silyl group,
(D3): at least one aromatic organic compound having at least two aromatic moieties and at least one group reactive in hydrosilylation,
which compounds shall be different from any of the components A) to F) of the composition of the invention. The preferred ones are included herein by reference to WO 2011/107592 (in the following the definition of the substituent groups refer to the definitions given in WO 2011/107592):

Component (D1) is preferably an polyorganosiloxane comprising at least one unit selected from the group consisting of

$$RHSiO_{2/2}$$

and

$$R^5(R)SiO_{2/2},$$

wherein R is as defined above and may be identical or different, $R^5$ is selected from the group consisting of unsaturated aliphatic group with up to 14 carbon atoms,
epoxy-group-containing aliphatic group with up to 14 carbon atoms, cyanurate-containing group, and an isocyanurate-containing group, and
further comprising at least one unit of the formula (3):

$$O_{2/2}(R)Si\text{-}R^4\text{-}SiR_d(OR^3)_{3\text{-}d} \qquad (3)$$

wherein

R is selected from optionally substituted alkyl with up to 30 carbon atoms, optionally substituted aryl with up to 30 carbon atoms, and may be identical or different,
$R^3$ is selected from H (hydrogen) and alkyl radicals having 1 to 6 carbon atoms, and may be identical or different,
$R^4$ is a difunctional optionally substituted hydrocarbyl radical with up to 15 carbon atoms, which may contain one or more heteroatoms selected from O, N and S atoms, and which is bond to the silicon atoms via an Si-C-bond, and d is 0 to 2.

Examples of component (D1) include compounds of the formulas (3a- 3d):

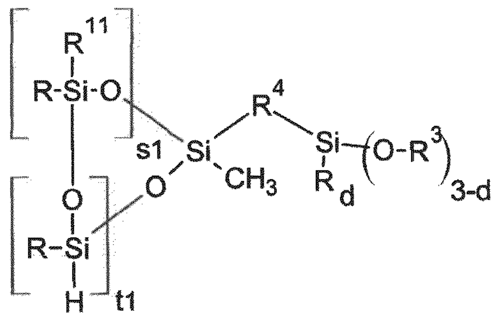

(3a)

$R^{11}$ is R or $R^5$, wherein R, $R^3$, $R^4$ and $R^5$ are as defined above and may be identical or different,

s1 = 0-6, preferably 1

t1 = 0-6, preferably 1 or 2

s1 + t1 = 2 - 6, preferably 2 or 3

with the proviso that there is at least one group -(OSi(R)H)- or -(OSi(R)($R^{11}$))- in the compound, preferably a compound of the formula:

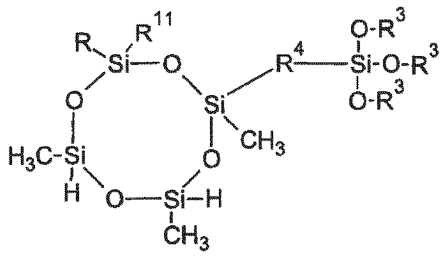

(3b)

wherein R, $R^3$, $R^4$ and $R^{11}$ are as defined before, and ring positions isomers thereof, a compound of the formula:

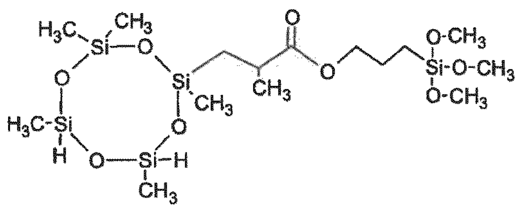

(3c)

and ring positions isomers thereof, a compound of the formula.

Furthermore compounds of formula:

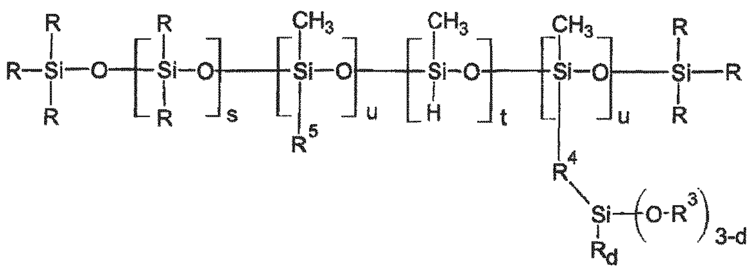

(3d)

wherein:

R, $R^3$, $R^4$, $R^5$ are as defined above,

s= 0 - 10 preferably = 0- 5
t= 0 - 50 preferably = 2- 30
u= 1-10 preferably = 1

$$s + t + u = \leq 70$$

with the proviso that there is at least one group -(OSi(R)H)- or -(OSi(R)($R^5$)- in the compound. These compounds may comprise to a certain content Q or T branching groups, replacing the D units.

$R^5$ is for example selected from:

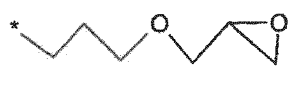

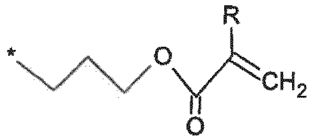

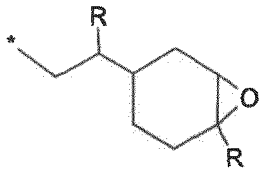

Component (D2) is preferably selected from compounds of the formula (4):

$$X\text{-}(CR^6{}_2)_e\text{-}Y\text{-}(CH_2)_eSiR_d(OR^3)_{3-d}$$

wherein

X is selected from the group consisting of halogen, pseudohalogen, unsaturated aliphatic group with up to 14 carbon atoms, epoxy-group-containing aliphatic group with up to 14 carbon atoms, cyanurate-containing group, and an isocyanurate-containing group,
Y is selected from the group consisting of a single bond, a heteroatomic group selected from -COO-, -O-, -S-, -CONH-, -HN-CO-NH-,
$R^6$ is selected from hydrogen and R as defined above,
e is 0, 1, 2, 3, 4, 5, 6, 7, or 8, and may be identical or different,
R is as defined above and may be identical or different,
$R^3$ is as defined above and may be identical or different,
d is 0, 1, or 2.

Preferred examples of component (D2) include:

(3e):

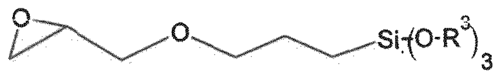

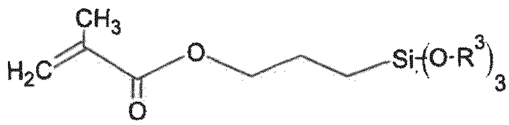

(3f)

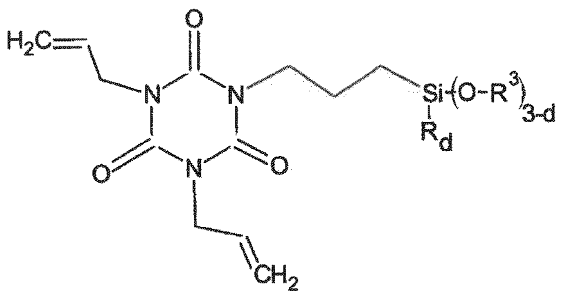

(3g)

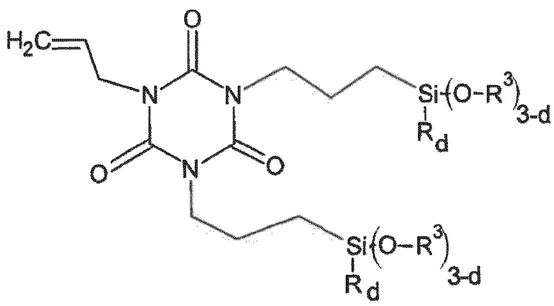

(3h)

wherein Rand d are as defined above.

Component (D2) apart from acting as an adhesion promoter, can serve in addition as *in-situ* surface treating agent for filler (E). It is preferred to use mixtures of silanes of the component (D2) to obtain acceptable adhesion properties at reduced costs. Component (D3) is preferably selected from compounds of the formula (3i):

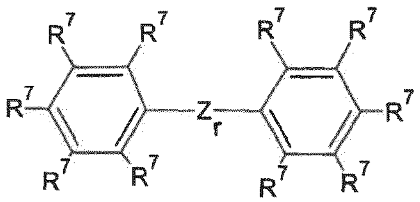

(3i)

wherein

r is 0 or 1,
$R^7$ may be the same or different group, which is selected from the group consisting of a hydrogen atom, a hydroxyl group, a halogen atom, an alkyl group, alkenyl group, alkoxy group, alkenyloxy group, alkenylcarbonyloxy group and an aryl group, and
a group of formula $-E_f-Si(OR)_{3-d}R_d$, wherein R is identical or different, and d is as defined above,
a group of formula $-O-Si(R)_2R^1$, wherein R and $R^1$ are as defined above,
a group of formula $-E_f-Si(R)_2H$, wherein R is as defined above,
wherein E is a divalent organic group with up to 8 carbon atoms and 0 to 3 hetero atomic groups selected from -O-, -NH-, C=O, and -C(=O)O-, and f is 0 or 1,
and Z is selected from the following groups:

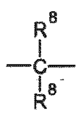 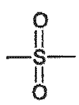 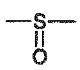 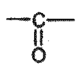 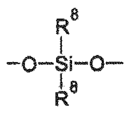

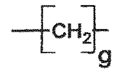

or

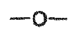

wherein $R^8$ is selected from the group of a hydrogen atom, a halogen atom, or a substituted or unsubstituted alkyl group, aryl group, alkenyl group and alkynyl group, and
g is a positive number of at least 2,
wherein at least one of the groups selected from $R^7$ and $R^8$ is reactive in hydrosilylation.

Preferred components (D3) include:

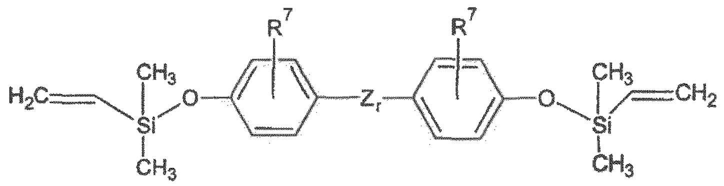

(3k)

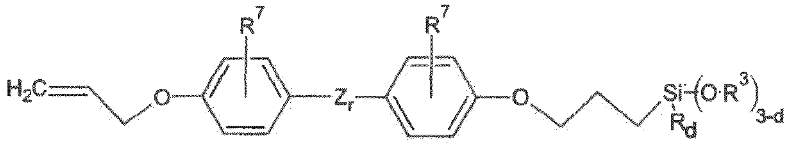

(3l)

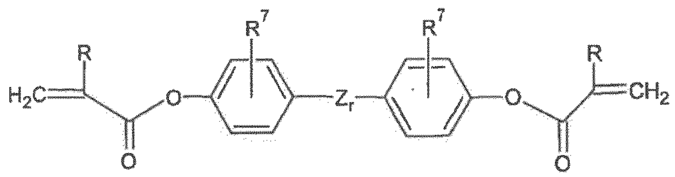

(3n)

wherein $Z_r$, $R^7$, $R^3$, R and d are each as defined above).

Further auxiliary additives include reactive surfactants such as Tego Glide 450, TegoRad 2100, TegoRad 2200N, BYK-UV 3530, BYK-UV 3570, BYK-UV 3505, and BYK-UV 3500. The auxiliary or conventional additives (F) can further comprise stabilizers against hot air, oils and solvents, process aids, mould release agents, wettings agents, pigments, blowing agents to initiate foaming, anti-microbial, fungicides or additive for increasing mildew resistance.

The auxiliary or conventional additives can further comprise a plasticizer or softener, which is preferably selected from silicone oils, preferably diorganopolysiloxanes; comprising $[R_2SiO]$-units, with R being a C-Si bonded organic group. Silicone oils are usually clear, colorless, non-toxic, inert, odorless, chemically inert, thermally stable, hydrophobic liquids having a number average molecular weight of preferably about 162 to about 150000 g / mol, a density from about 0.76 to about 1.07 g/cm$^3$ and viscosities from about 0.6 to about 1,000,000 mPa·s (20 °C). Preferred silicone oils include polydimethylsiloxane oils. The use of such silicone oils is preferred to achieve Shore A hardness of $\leq$ 20.

The auxiliary or conventional additives further include e.g. plasticizers, or release oils, or hydrophobicizing oils, such as polydimethylsiloxane oils having a viscosity which is preferably about 0.001 to about 10 Pa.s at 25°C. Additional mould-release or flow improving agents can also be used, examples being fatty acid derivatives or fatty alcohol derivatives, fluoroalkyl surfactants. Compounds advantageously used here are those, which separate rapidly and migrate to the surfaces. Stability after exposure to hot air can by way of example be increased using known hot-air stabilizers, such as Fe-, Mn-, Ti-, Ce- or La-compounds, and organic salts of these, preferably their organic complexes.

The auxiliary additives may also include so-called inhibitors for controlling the crosslinking reaction. It is intended to extent the pot-life of the silicone composition to be shaped. The use of such inhibitors may be suitable to decrease the cure rate. Examples of advantageous inhibitors include for example vinylsiloxanes, such as 1,3-divinyltetramethyldisiloxane, or tetravinyl-tetramethyl-tetracyclosiloxanes. It is also possible to use other known inhibitors, for example ethynylcyclohexanol, 3-methylbutynol, or dimethylmaleate. In a preferred embodiment of the invention the addition-curable silicone rubber composition contain at least one inhibitor for controlling the crosslinking reaction to decrease the cure rate and to extend pot-life of the addition-curable silicone rubber composition.

In a preferred embodiment the curable silicone compositions comprise an auxiliary additive selected from the group of an inhibitor; a plasticizer or softener, preferably selected from a silicone oil, more preferably selected from a

polydimethylsiloxane oil, non-reinforcing fillers, preferably selected from fine ground silica or quartz; fiber materials, such as polyester fiber, cellulose fiber, polyamide fiber such as Nylon fiber, polyurethane fiber such as Spandex fiber, and glass fiber. In a further particular embodiment the addition-curable silicone rubber composition of the invention comprises at least one inhibitor.

In a preferred embodiment of the invention it relates to a curable two-component composition consisting of:

Component (I), comprising

(B) at least one polyorganohydrogensiloxane,
(D) at least one functional polysiloxane as defined in any of the previous embodiments,
(E) optionally one or more filler, and
(F) optionally one or more auxiliary additives, and

Component (II), comprising

(A) at least one polyorganosiloxane having at least two unsaturated hydrocarbyl residues,
(C) at least one hydrosilylation catalyst, comprising a transition metal,
(E) optionally one or more filler, and
(F) optionally one or more auxiliary additives,

wherein these components are each as defined above.

In a preferred embodiment of the invention the curable compositions according to the inventions comprise less than about 5 wt-%, preferably less than about 2 wt-% of the functional polysiloxanes of the invention. Preferably the curable compositions according to the inventions comprise about 0.05 to about 3 wt-% of the functional polysiloxane of the invention, more preferably about 0.1 to about 2 wt-%, based on the total amount of the curable compositions.

The composition of the present invention can be prepared by homogeneously mixing components (A) - (F) using suitable mixing means, such as spatula, a drum roller, a mechanical stirrer, a three roll mill, a sigma blade mixer, a dough mixer, a planetary mixer, a horizontal mixer, screws, dissolver, butterfly mixer, press mixer, or a vacuum mixer.

The order of mixing components (A) - (F) is not critical, however, it is preferred that certain components can be mixed to form two or more packages which can be stored, if desired, and then mixed in a final step immediately prior to the intended use thereof.

The addition-curable silicone rubber composition according to the invention preferably comprise

about 100 parts by weight of component (A),
about 0.01 to about 100 parts by weight of component (B), preferably about 0.5 to about 50 parts by weight
about 0.5 to about 1000 ppm, preferably about 1 to 1 about 00 ppm of component (C) based on the weight amount of the transition metal and based on the total weight of components (A) and (B),
about 0.01 to about 10 parts by weight of component (D), preferably about 0.02 to about 5 parts by weight of component (D),
0 to about 100 parts by weight of component (E), preferably about 1 to about 50 parts by weight of component (G) and
0 to about 100 parts by weight of component (F), preferably about 0.001 to about 15 parts, preferably from about 0.002 to about 6 parts by weight of the component (H).

Preferably the curable compositions according to invention cure at room temperature (RTV - 25°C) or at elevated temperatures of from about about 40 to about 200°C, preferably about 80 to about 160°C, or under the exposure of light, such as UV light.

The present invention further relates to the cured compositions obtained by curing the curable compositions as described above.

The present invention further relates to composite article, comprising the cured composition as decribed above in contact with at least one substrate preferably selected from metal substrates, glass substrates, ceramic substrates, paper substrates, polymer substrates, preferably polyethylene, polypropylene, polycarbonates, polyesters, such as polyethylene terephthalate (PET), polyimides, polyamides etc.. A composite article according to the present invention means that the cured composition of the invention is in contact with at least part of the surface of the substrate.

The surface of the substrates may be subjected to a surface treatment before applying the curable compositions of the invention, such as ozone, plasma, wet chemical treatment methods like for example with Caro's acid (peroxymonosulfuric acid), Piranha solution and other treatment methods.

The present invention further relates to the use of the curable compositions as described above for the

manufacture of, or the use as release coatings, elastomers, in particular, self adhesive elastomers, (optical) bonding materials, silicone encapsulants for electronic devices, such as electronic circuits, photovoltaic cells, integrated circuits, etc.

Accordingly a cured composition according to the invention is preferably selected from a release coating, an elastomer, in particular, a self adhesive elastomer, an (optical) bonding material, and a silicone encapsulant for electronic devices, such as electronic circuits, photovoltaic cells, integrated circuits etc.

The present invention further relates a component in particular of a curable two-component composition, comprising:

(B) the at least one polyorganohydrogensiloxane, as defined above, and
(D) the at least one functional polysiloxane as defined above.

The present invention further relates to process for the manufacture of the functional polysiloxanes according to the invention, which comprises the reaction of a polysiloxane having at least one SiH group and at least one diorganosiloxy group with an organic compound having at least one acid anhydride group and at least one unsaturated hydrocarbyl group in the presence of a hydrosilation catalyst. This process and the hydrosilation catalyst is as described above. Regarding the polysiloxane having at least one SiH group and at least one diorganosiloxy group it can be basically referred to the corresponding polyorganohydrogensiloxanes used as component B). Preferably the manufacture of the functional polysiloxanes according to the invention is carried out in the presence of a hydrosilation catalyst which is immobilized on a carrier such as platinum on nano $SiO_2$. The present invention thus also related to a functional polysiloxane as obtainable by this process.

The present invention further relates to the use of the functional polysiloxane of the invention as an adhesion promotor, preferably in curable silicone compositions.

The present invention further relates to the use of the functional polysiloxane of the invention for the manufacture of release coatings, elastomer articles, in particular self adhesive elastomer articles, silicone encapsulants for electronic devices, and binding materials.

The present invention further relates to a method of coating substrates, comprising the steps of:

a) applying a curable coating composition, preferably the curable polorganosiloxane composition, comprising at least one functional polysiloxane as defined above to at least one substrate, and
b) curing the curable coating composition onto that substrate.

The present invention further relates to a substrate having a release coating which is prepared from a curable composition, comprising at least one functional polysiloxane as defined above, said substrate being preferably selected from polyethylene (PE), polypropylene (PP) and PET (polyethylene terephthalate) and polycoated PET.

In a preferred embodiment of the invention, the substrate is selected from paper substrates such as polycoated paper, poly coated kraft paper (PE and/or PP), glassine, CCK (clay coated kraft paper), SCK (super calendared kraft paper), HCK (Hybrid clay coated paper), MG (machine glazed paper) parchment and bakery paper, etc..

In a preferred embodiment the invention relates to a substrate in contact with a silicone rubber composition which is prepared from the curable compositions as defined above.

It will be understood that any numerical range recited herein includes all sub-ranges within that range and any combination of the various endpoints of such ranges or sub-ranges, be it described in the examples or anywhere else in the specification.

Other than in the working examples or where otherwise indicated, all numbers expressing amounts of materials, reaction conditions, time durations, quantified properties of materials, and so forth, stated in the specification and claims are to be understood as being modified in all instances by the term "about" whether or not the term "about" is used in the expression. It will also be understood herein that any of the components of the invention herein as they are described by any specific genus or species detailed in the examples section of the specification, can be used in one embodiment to define an alternative respective definition of any endpoint of a range elsewhere described in the specification with regard to that component, and can thus, in one non-limiting embodiment, be used to supplant such a range endpoint, elsewhere described.

It will be further understood that any compound, material or substance which is expressly or implicitly disclosed in the specification and/or recited in a claim as belonging to a group of structurally, compositionally and/or functionally related compounds, materials or substances includes individual representatives of the group and all combinations thereof.

While the above description contains many specifics, these specifics should not be construed as limitations on the scope of the invention, but merely as exemplifications of preferred embodiments thereof. Those skilled in the art may envision many other possible variations that are within the scope of the invention as defined by the claims appended hereto.

## Examples

The anchorage additive is made in a two-step process: In the first step, an SiH-functional polysiloxane is made by acid-catalyzed equilibration. In the second step, allyl succinic anhydride is attached at the polymer chain by using a solid-supported hydrosilylation catalyst as described in US 9,993,812 B2. Correlation spectroscopy ($^{29}Si/^{1}H$ HMQC) was used to establish the resulting structure. The polysiloxanes have methyl groups as organic groups unless indicated otherwise (i.e. D is a dimethylsiloxy group).

**Example 1:** $^{H}MD_{15}D^{H}_{30}M^{H}$

To a four-neck round bottom flask equipped with mechanical stirring, thermowell, and reflux condenser connected to a nitrogen bubbler, were added octamethylcyclotetrasiloxane ($D_4$, 556.14 g, 1.875 mol), tetramethyldisiloxane (TMDSO, 67.17 g, 0.5 mol) and tetramethylcyclotetrasiloxane ($D_4^{H}$, 901.91 g, 3.75 mol). The flask was inerted ($N_2$). Triflic acid (TfOH, 0.44 mL, 0.005 mol) was added via a Teflon syringe and the reaction mixture was heated to 70 °C and stirred for 4.5 hrs.

The reaction mixture was allowed to cool to 45 °C. A paste of NaHCOs (25.6 g, 0.305 mol) and water (3.05 mL, 0.169 mol) was added portion wise with stirring, and the mixture was stirred at 70°C for 1.5 hrs. An aliquot was contacted with a small amount of water and checked for pH to be between 6.5 and 7.5.

The reaction mixture was cooled to room temperature, the salts were removed by filtration and the product was was devolatilized at 150 °C and 0.1 Torr to yield the title product as a clear, colorless oil. Yield: 1361.9g (87.3%).

**Example 2:** $^{H}MD_{25}D^{H}_{27}M^{H}$

To a four-neck round bottom flask equipped with mechanical stirring, thermowell, and reflux condenser connected to a nitrogen bubbler, were added octamethylcyclotetrasiloxane ($D_4$, 741.53 g, 2.5 mol), tetramethyldisiloxane (TMDSO, 53.73 g, 0.4 mol), and tetramethylcyclotetrasiloxane ($D^{H}_{4}$, 649.38 g, 2.7 mol). The flask was inerted ($N_2$). Triflic acid (TfOH, 0.35 mL, 0.004 mol) was added via a Teflon syringe and the reaction mixture was heated to 70 °C and stirred for 4.5 hrs.

The reaction mixture was allowed to cool to 45 °C. A paste of NaHCOs (20.5 g, 0.244 mol) and water (2.44 mL, 0.135 mol) was added portion wise with stirring, and the mixture was stirred at 70°C for 1.5 hrs. An aliquot was contacted with a small amount of water and checked for pH to be between 6.5 and 7.5.

The reaction mixture was cooled to room temperature, the salts were removed by filtrationand the product was devolatilized at 150°C and 0.1 Torr to yield the title product as a clear, colorless oil. Yield: 1298.5 g (89.8%).

**Example 3:** Functional Polysiloxane A1

To a four-neck round bottom flask equipped with mechanical stirring, thermowell, and reflux condenser attached to a nitrogen bubbler, were added the $^{H}MD_{15}D^{H}_{30}M^{H}$ fluid from Example 1 (137.27 g, 45.0 mmol), toluene (111.95 g), and a catalytic amount of Pt supported on silica as described in US 9,993,812 B2 (5.0 mg Pt, 0.025 mmol). The mixture was heated to 100 °C and allylsuccinic anhydride (12.61 g, 90.0 mmol) was added dropwise through an addition funnel over 15 minutes. After 10 h, the reaction mixture was cooled to room temperature, the catalyst was removed by filtration, and the product was devolatilized at 90 °C and 2 Torr to yield the title product as a hazy, yellow oil. Yield: 145.0 g (96.7%). The resulting functional polysiloxane contained SiH, D groups and succinic anhydride-containing siloxy groups.

**Example 4:** Functional Polysiloxane A2

To a four-neck round bottom flask equipped with mechanical stirring, thermowell, and reflux condenser attached to a nitrogen bubbler, were added the $^{H}MD_{25}D^{H}_{27}M^{H}$ fluid from Example 2 (306.99 g, 85.0 mmol), toluene (211.46 g), and a catalytic amount of Pt supported on silica as described in US 9,993,812 B2 (9.4 mg Pt, 0.048 mmol). The mixture was heated to 100°C and allylsuccinic anhydride (23.82 g, 170.0 mmol) was added dropwise through an addition funnel over 15 minutes. After 7 h, the reaction mixture was cooled to room temperature, the catalyst was removed by filtration, and the product was devolatilized at 90 °C and 2 Torr to yield the title product as a hazy, yellow oil. Yield: 316.8 g (95.8%). The resulting functional polysiloxane contained SiH, D groups and succinic anhydride-containing siloxy groups.

Testing:

In evaluating the performance of the above mentioned anchorage additive examples, a Pilot Coater Trial was designed to apply thermal solventless release coatings formulated with the anchorage additive on a given substrate.

Formulations 1 to 3 were designed using a vinyl-end-stopped PDMS/inhibitor package, 50 ppm Karstedt's-like catalyst and enough polymethyl hydrogen siloxane added to achieve a hydride to vinyl ratio of 2.0.

The anchorage additive examples were added in at 1.0 wt-% of total weight of the formulations 2 and 3. The anchorage additive was not included in the calculation of the hydride to vinyl ratio.

The comparative formulation 1 did not contain an anchorage additive. Cured silicone coated samples of substrates were then generated for testing purposes. Anchorage testing was done by a manual finger rub across the silicone coated substrate and rated on the ability to anchor onto the given substrate.

Anchorage testing was performed on samples immediately after completing the designed Pilot Coater experiment. Samples were then placed into 100% relative humidity (RH) environment at 80°C and re-tested multiple times over a two (2) week time period.

The following results were generated:

| Formulation | Functional Polysiloxane | Anchorage Performance Rub-off Test | | | | |
|---|---|---|---|---|---|---|
| | | (Initial) | (24 hours) | (96 hours) | (1 week) | (2 weeks) |
| 1 | - | ++ | -- | -- | - - | -- |
| 2 | A1 | ++ | ++ | ++ | ++ | ++ |
| 3 | A2 | ++ | ++ | ++ | ++ | + |
| Very strongly attached (++); strongly attached (+); weakly attached (-), very weakly attached (- -). | | | | | | |

**Example 5:** Synthesis of $M^HD_{15}D^H_{30}M^H$

Octamethylcyclotetrasiloxane (36.46 g, 0.1229 mol), 1,3,5,7-tetramethylcyclotetrasiloxane (59.13 g, 0.2459 mol), tetramethyldisiloxan (4.40 g, 0,03276 mol) and perfluorobutanesulfonic acid (1000 ppm, 0.1 g) were heated to 70°C for 4.5 hrs. After the reaction mixture was allowed to cool to room temperature, water (0.2 g) and potassium hydrogen carbonate (2 g) was added and the mixture was heated at 70°C for additional 1.5 hrs. Thereafter, the pH of the mixture was confirmed to be neutral. Filtration was achieved using a pressure-operated filter nutsch. Volatiles were removed in vacuo (0.4 mbar) at 150 °C for 1hr. The neat product was received as colorless oil (yield 77.6 g). The structure was confirmed by $^1$H- and $^{29}$Si-NMR.

**Example 6:** Functional Polysiloxane A3

0.2 wt% Pt on nano $SiO_2$; 17.86 g) was added at 80°C to a solution of ($M^HD_{15}D^H_{30}M^H$; 628.2 g, 10.0454mmol SiH/g as prepared in example 5) in toluene (1100 g) followed by the slow addition of allyl succinic anhydride (57,7 g, 0,41185 mol). Thereafter the reaction mixture was heated to 110 °C for 20 hrs, cooled to room temperature and the catalyst was removed by filtration. The solvent was removed in vacuo (< 1 mbar) at 40°C. The neat product was received as clear slightly yellow oil (yield 642.6 g). The resulting functional polysiloxane contained SiH, D groups and succinic anhydride-containing siloxy groups.

**Example 7:** Functional Polysiloxane A4

A silicone hydride fluid of the formula $M_{0.72}D_{17.32}D^H_{19.51}M^H_{1.28}$ was prepared in an equilibration reaction at 70°C for 2.5 hrs. from octamethylcyclotetrasiloxane, tetramethyldisiloxane, polymethylhydrosiloxane (SiH = 0.04 wt%) and perfluoro-n-butanoic acid as the catalyst. Acid neutralization was performed with sodium hydrogen carbonate.

In the subsequent step, 400.0 g of the silicone hydride fluid of the formula $M_{0.72}D_{17.32}D^H_{19.51}M^H_{1.28}$ dissolved in 721.0 g toluene was reacted with 27.6 g allyl succinic acid anhydride in the presence of 11.5 g of an immobilized Pt (0.2 wt%) on $SiO_2$ catalyst (from patent publication WO2013/158272A1) under reflux conditions. After 5 hours, the solids were separated and the solvent was removed in vacuo (1 mbar, 40°C). The product was obtained as a clear colorless liquid. The polymer-chain bound anhydride content was determined by $^1$H- and $^{29}$Si-NMR to be 0.37 mmol/g, while the remaining SiH content was determined to be 6.95 mmol/g. The resulting functional polysiloxane contained SiH, D groups and succinic anhydride-containing siloxy groups.

**Example 8:** Functional Polysiloxane A5 (comparative)

19.7 g polymethylhydrosiloxane of the formula $MD^H_{39.10}M$ (SiH=1.6 wt-%) dissolved in 36.9 g toluene was reacted with 1.4 g allyl succinic acid anhydride (ASA) in the presence of 1.2 g of an immobilized Pt (0.2 wt%) on $SiO_2$

catalyst (from patent publication WO2013/158272A1) under reflux conditions. After 9 hrs. reaction time, he solids were separated and the solvent was removed in vacuo (1 mbar, 40°C). A product of the formula $MD^{H}_{37.73}D^{ASA}_{0.66}M$ (determined by $^{1}H$ and $^{29}Si$-NMR) was obtained as a clear colorless liquid. The resulting functional polysiloxane did not have a dimethylsiloxy group (D).

**Example 9:** Functional Polysiloxane A6 (comparative)

19.7 g polymethylhydrosiloxane of the formula $MD^{H}_{39.10}M$ (SiH=1.6 wt-%) dissolved in 36.9 g toluene was reacted with 1.4 g allyl succinic acid anhydride in the presence of 5 ppm cis-dichlorobis(diethyl sulfide)platinum(II) (0.5 wt% solution in toluene) as homogeneous catalyst under reflux conditions. After 5 hrs. reaction time, the solvent was removed in vacuo (1 mbar, 40°C). A product of the formula $MD^{H}_{37.02}D^{ASA}_{1.11}M$ (determined by $^{1}H$ and $^{29}Si$-NMR) was obtained as a clear colorless liquid. The resulting functional polysiloxane did not have a dimethylsiloxy group (D).

**Example 10:** Functional Polysiloxane A7 (comparative)

12.0 g polymethylhydrosiloxane of the formula $D^{H}_{4}$ (cyclic structure, SiH = 1.4 wt%) dissolved in 33.5 g toluene was reacted with 7.0 g allyl succinic acid anhydride in the presence of 0.03 g of an immobilized Pt (0.2 wt%) on $SiO_2$ catalyst (from patent publication WO2013/158272A1) under reflux conditions. After 5 hrs., the solids were separated and the solvent was removed in vacuo (1 mbar, 40°C). A product of the formula $D^{H}_{3}D^{ASA}_{1}$ (determined by $^{1}H$ and $^{29}Si$-NMR) was obtained as a pale yellowish liquid. The resulting functional polysiloxane did not have a dimethylsiloxy group (D).

**Example 11:** Functional Polysiloxane A8 (comparative)

12.0 g polymethylhydrosiloxane of the formula $D^{H}_{4}$ (cyclic structure, SiH = 1.4 wt%) dissolved in 33.5 g toluene was reacted with 7.0 g allyl succinic acid anhydride in the presence of 0.03 g of 5 ppm cis-dichlorobis(diethyl sulfide) platinum(II) (0.5 wt% solution in toluene) as homogeneous catalyst under reflux conditions. After 5 hrs., the solvent was removed in vacuo (1 mbar, 40°C). A product of the formula $D^{H}_{3}D^{ASA}_{1}$ (determined by $^{1}H$ and $^{29}Si$-NMR) was obtained as a slightly turbid yellowish liquid. The resulting functional polysiloxane did not have a dimethylsiloxy group (D).

**Example 12:** Functional Polysiloxane A9 (comparative)

A silicone hydride fluid was prepared in an equilibration reaction at 70°C for 2.5 hrs. from hexamethyldisiloxane and polymethylhydrosiloxane (linear structure, SiH = 0.9 wt%, $M_2D^{H}_{3.07}$) and perfluoro-n-butanoic acid as the catalyst. Acid neutralization was performed with sodium hydrogen carbonate.

In the subsequent step, 10.4 g of the prepared silicone hydride fluid dissolved in 38.8 g toluene was reacted with 12.9 g allyl succinic acid anhydride (ASA) in the presence of 0.8 g of an immobilized Pt (0.2 wt%) on $SiO_2$ catalyst (from patent publication WO2013/158272A1) under reflux conditions. The solids were separated after a reaction time of 19 hrs. and subsequently the solvent was removed in vacuo (1 mbar, 40°C). A product of the formula $MD^{H}_{0.14}D^{ASA}_{3.23}M$ (determined by $^{1}H$ and $^{29}Si$-NMR) was obtained as a dark-yellowish liquid. The resulting functional polysiloxane did not have a dimethylsiloxy group (D).

**Example 13:** Functional Polysiloxane A10 (comparative)

A silicone hydride fluid of the formula was prepared in an equilibration reaction at 70°C for 2.5 hrs. from tetramethyldisiloxane and polymethylhydrosiloxane (linear structure, SiH = 0.6 wt%, $M_2D^{H}_{3.27}$) and perfluoro-n-butanoic acid as the catalyst. Acid neutralization was performed with sodium hydrogen carbonate.

In the subsequent step, 45.0 g of the prepared silicone hydride fluid dissolved in 38.8 g toluene was reacted with 33.7 g allyl succinic acid anhydride (ASA) in the presence of 0.8 g of an immobilized Pt (0.2 wt%) on $SiO_2$ catalyst (from patent publication WO2013/158272A1) under reflux conditions. After a conversion time of 7 hrs (respect to ASA). the solids were separated and the solvent was removed in vacuo (1 mbar, 40°C). A product of the formula $M^{ASA}_{2}D_{4.40}$ (determined by $^{1}H$ and $^{29}Si$-NMR) was obtained as a transparent liquid. The resulting functional polysiloxane did not have an SiH-group.

**Example 14:** Functional Polysiloxane A11 (comparative)

A mixture of 13.4 g tetramethyldisiloxane, 14.8 g vinyltrimethoxysilane and 10 ppm Lamoreaux' catalyst was heated at 130°C for 4 hrs. Subsequently, the intermediate product was reacted with 18.2 g allyl succinic anhydride (ASA) and by adding additional 10 ppm of Lamoreaux' catalyst. The reaction mixture was heated for 9 hrs. at 110°C. Finally, the

product of the general formula $^{ASA}M\text{-}M^{(CH2CH2Si(OCH3)3)}$ (determined by $^{1}H$ and $^{29}Si$-NMR) was obtained as a brownish clear liquid. The resulting functional polysiloxane did neither have an SiH-group nor a D group.

**Example 15:** Functional Polysiloxane A12 (comparative) I

$^{H}MD_{3.35}M^{(CH2CH2Si(OCH3)3)}$ was prepared according to synthesis procedure described in WO2017012714A.
Subsequently, 10.0 g of intermediate $M^{(H)}D_{3.35}M^{(CH2CH2Si(OCH3)3)}$ was reacted for 4 hrs. at 100°C with 3.3 g allyl succinic anhydride (ASA) in the presence of 10 ppm chloroplatinic acid as the hydrosilylation catalyst. A product of the formula $^{ASA}MD_{3.35}M^{(CH2CH2Si(OCH3)3)}$ (determined by $^{1}H$ and $^{29}Si$-NMR) was obtained as a slightly brownish liquid. The resulting functional polysiloxane did not have an SiH-group.

**Example 16:** Functional Polysiloxane A13 (not acccording to the invention)

10.0 g of a SiH hydride fluid of the formula $MD_{24.76}D^{(H)}_{55.72}M$ was dissolved in 17.0 g toluene and reacted with 0.5 g allyl succinic acid anhydride in the presence of 0.3 g of an immobilized Pt (0.2 wt%) on $SiO_2$ catalyst (from patent publication WO2013/158272A1) under reflux conditions. After a reaction time of 5 hrs. the solids were separated and the solvent was removed in vacuo (1 mbar, 40°C). The product was obtained as a transparent liquid. The resulting functional polysiloxane contained SiH, D groups and succinic anhydride-containing siloxy groups. The polymer-chain bound anhydride content was determined by $^{1}H$ and $^{29}Si$-NMR to be 0.25 mmol/g.

**Example 17:** Functional Polysiloxane A14 (inventive)

A silicone hydride fluid of the formula $^{H}M_{2}D_{18.94}D^{H}_{36.30}$ was prepared in an equilibration reaction at 70°C for 2.5 hrs. from octamethylcyclotetrasiloxane, tetramethyldisiloxane, polymethylhydrosiloxane (SiH = 1.7 wt%) and perfluoro-n-butanoic acid as the catalyst. Acid neutralization was performed with sodium hydrogen carbonate.
In the subsequent step, 33.0 g of the prepared silicone hydride fluid dissolved in 57.8 g toluene was reacted with 3.03 g allyl succinic acid anhydride (ASA) in the presence of 1.1 g of an immobilized Pt (0.2 wt%) on $SiO_2$ catalyst (from patent publication WO2013/158272A1) under reflux conditions. After a conversion time of 6 hrs. the solids were separated and the solvent was removed in vacuo (1 mbar, 40°C). The product was obtained as a transparent liquid. The polymer chain bound anhydride content was determined by $^{1}H$ and $^{29}Si$-NMR to be 0.49 mmol/g, while the remaining SiH content was determined to be 8.78 mmol/g. The resulting functional polysiloxane contained SiH, D groups and succinic anhydride-containing siloxy groups.

**Example 18:** Functional Polysiloxane A15 (inventive)

A silicone hydride fluid of the formula $^{H}M_{2}D_{9.08}D^{H}_{8.36}$ was prepared in an equilibration reaction at 70°C for 2.5 hrs. from octamethylcyclotetrasiloxane, tetramethyldisiloxane, polymethylhydrosiloxane (SiH = 1.7 wt%) and perfluoro-n-butanoic acid as the catalyst. Acid neutralization was performed with sodium hydrogen carbonate.
In the subsequent step, 20.0 g of the above silicone hydride fluid was dissolved in 40.0 g toluene and reacted with 3.0 g allyl succinic acid anhydride in the presence of 0.6 g of an immobilized Pt (0.2 wt%) on $SiO_2$ catalyst (from patent publication WO2013/158272A1) under reflux conditions. After 5 hrs. reaction time the solids were separated and the solvent was removed in vacuo (1 mbar, 40°C). The product was obtained as a clear colorless liquid. The polymer-chain bound anhydride content was determined by $^{1}H$ and $^{29}Si$-NMR to be 0.94 mmol/g, while the remaining SiH content was determined to be 6.05 mmol/g. The resulting functional polysiloxane contained SiH, D groups and succinic anhydride-containing siloxy groups. The product is a short chain polymer with a D/DH ratio of about 1/1, and a high ASA concentration.

**Example 19:** Functional Polysiloxane A16 (inventive)

A silicone hydride fluid of the formula $^{H}M_{2}D_{32.95}D^{H}_{10.18}$ was prepared in an equilibration reaction at 70°C for 2.5 hrs. from octamethylcyclotetrasiloxane, tetramethyldisiloxane, polymethylhydrosiloxane (SiH = 1.7 wt%) and perfluoro-n-butanoic acid as the catalyst. Acid neutralization was performed with sodium hydrogen carbonate.
In the subsequent step, 20.0 g of the above silicone hydride fluid was dissolved in 40.2 g toluene and reacted with 1.23 g allyl succinic acid anhydride in the presence of 0.6 g of an immobilized Pt (0.2 wt%) on $SiO_2$ catalyst (from patent publication WO2013/158272A1) under reflux conditions. After 5 hrs. reaction time the solids were separated and the solvent was removed in vacuo (1 mbar, 40°C). The product was obtained as a clear colorless liquid. The polymer-chain bound anhydride content was determined by $^{1}H$ and $^{29}Si$-NMR to be 0.34 mmol/g, while the remaining SiH content was determined to be 3.24 mmol/g. The resulting functional polysiloxane contained SiH, D groups and succinic anhydride-containing siloxy groups.

**Example 20:** Functional Polysiloxane A17 (inventive)

A silicone hydride fluid of the formula $M^{H}_{2}D_{9.08}D^{H}_{8.36}$ was prepared in an equilibration reaction at 70° for 2.5 hrs. from octamethylcyclotetrasiloxane, tetramethyldisiloxane, polymethylhydrosiloxane (SiH = 1.7 wt%) and perfluoro-n-butanoic acid as the catalyst. Acid neutralization was performed with sodium hydrogen carbonate.

In the subsequent step, 20.0 g of the silicone hydride fluid was dissolved in 40.0 g toluene and reacted with 1.3 g allyl succinic acid anhydride in the presence of 0.6 g of an immobilized Pt (0.2 wt%) on $SiO_2$ catalyst (from patent publication WO2013/158272A1) under reflux conditions. After 5 hrs. reaction time the solids were separated and the solvent was removed in vacuo (1 mbar, 40°C). The product was obtained as a clear colorless liquid. The polymer-chain bound anhydride content was determined by $^{1}H$- and $^{29}Si$-NMR to be 0.38 mmol/g, while the remaining SiH content was determined to be 8.00 mmol/g. The resulting functional polysiloxane contained SiH, D groups and succinic anhydride-containing siloxy groups.

**Example 21:** Functional Polysiloxane A18 (inventive)

A silicone hydride fluid of the formula $M^{H}_{2}D_{106.77}D^{H}_{105.43}$ was prepared in an equilibration reaction at 70° for 2.5 hrs. from octamethylcyclotetrasiloxane, tetramethyldisiloxane, polymethylhydrosiloxane (SiH = 1.7 wt%) and perfluoro-n-butanoic acid as the catalyst. Acid neutralization was performed with sodium hydrogen carbonate.

In the subsequent step, 20.0 g of the silicone hydride fluid was dissolved in 35.5 g toluene and reacted with 1.53 g allyl succinic acid anhydride in the presence of 0.6 g of an immobilized Pt (0.2 wt%) on $SiO_2$ catalyst (from patent publication WO2013/158272A1) under reflux conditions. After 5 hrs. reaction time the solids were separated and the solvent was removed in vacuo (1 mbar, 40°C). The product was obtained as a clear colorless liquid. The polymer-chain bound anhydride content was determined by $^{1}H$- and $^{29}Si$-NMR to be 0.46 mmol/g, while the remaining SiH content was determined to be 6.35 mmol/g. The resulting functional polysiloxane contained SiH, D groups and succinic anhydride-containing siloxy groups.

The performance of the functional polysiloxanes A4-A18 were tested by using a typical paper release coatings formulation composed of:

| Component | Weight (g) | |
|---|---|---|
| | Formulation A | Formulation B |
| Vinyl stopped polydimethylsiloxane with a viscosity of ca 250 mPa.s with 0.2% of ethynylcyclohexanol | 99.00 | 99.00 |
| Polymethylhydridosiloxane Crosslinker (1.032 wt% SiH) | 4.45 | - |
| Polymethylhydridosiloxane Crosslinker (0.735 w% SiH) | - | 5.80 |
| Vinyl stopped polydimethylsiloxane with a viscosity of ca 250 mPa.s with 1000 ppm Pt catalyst | 1.00 | 1.00 |
| Anchorage Additive or Comparative Additive | 0.50 | 0.50 |
| | | |

The components were thoroughly mixed and the formulation was coated onto a UPM Golden Biocoat Glassine paper (reel width = 800 mm, core = 76 mm; Order-No. CH-5878964-02) with a deposition weight of 1.2 g/m$^2$ utilizing the coating knife of a Mathis Lab Coater. All samples were subjected to the same curing condition using an oven temperature of 130°C and 30 seconds as curing time.

The anchorage performance of the different prepared samples was evaluated by a finger rub-off test upon all samples were room temperature aged for 24 hrs. Additionally, the anchorage strengths to the paper substrate was quantified using an anchorage test[1], which provides a measure for the weight loss for the removed silicone coating as the effect of the mechanical abrasion (see table below).

[1] *Anchorage test: A paper specimen (round shaped; 10.0 cm$^2$) is pressed with a weight of 4.4 kg with its coated surface onto a textile felt strip. Subsequently, the paper specimen is shoved (at room temperature) with a constant velocity of 9.2 cm/sec. over the felt strip until it completes a total distance of 70.0 cm. The felt strip is replaced for each test sample to ensure the same abrasion conditions. The weight loss of the paper specimen (weight before and after the abrasion test) is taken as a measure for the adhesion strength of the coating layer to the substrate. I.e., a loss of 75 wt% material through*

*abrasion refers to 25 wt% Ducal Test Material Retention.*

| | Anchorage Performance Evaluation: Anchorage Test | | | | |
|---|---|---|---|---|---|
| Functional Polysiloxane | Formulation | Curing Performance | Finger Rub-off Test[b] | Anchorage Test, Material Retention (wt%) | Anhydride conc in mmol/g |
| A4 (invent) | A | Good | (+) | 97 | 0.37 |
| A5 (comp) | A | Bad | (-) | -[c] | 0.26 |
| A6 (comp) | A | Not tested[a] | - | - | 0.43 |
| A7 (comp) | A | Good | (-) | 84 | 2.63 |
| A8 (comp) | A | Good | (-) | 83 | 2.63 |
| A9 (comp) | A | Good | (-) | 41 | 3.95 |
| A10 (comp) | A | Good | (- -) | 9 | 2.70 |
| A11 (comp) | A | Good | (-) | 47 | 2.36 |
| A12 (comp) | A | Good | (-) | 41 | 1.49 |
| A13 * | A | Good | (+) | 94 | 0.25 |
| A14 (invent) | A | Good | (+) | 94 | 0.49 |
| A15 (invent) | A | Good | (++) | 100 | 0.94 |
| A16 (invent) | A | Good | (++) | 94 | 0.34 |
| A17 (invent) | B | Good | (++) | 98 | 0.38 |
| A18 (invent) | B | Good | (++) | 97 | 0.46 |
| [a] Shelf lifetime limited , Additive gelates after 1 week storage under ambient conditions. Coating formulation could not be prepared<br>[b] Very strongly attached (++); strongly attached (+); weakly attached (-), very weakly attached (- -).<br>[c] Not possible to measure as material was not solidified during curing process. | | | | | |
| * Not according to the invention | | | | | |

The performance of the functional polysiloxane A4 was also tested by using a typical release coating formulation on a filmic liner composed of:

| Component | Weight (g) | |
|---|---|---|
| | Formulation C | Formulation D |
| Vinyl stopped polydimethylsiloxane with a viscosity of ca 250 mPa.s with 0.2% of ethynylcyclohexanol | 97.00 | 97.00 |
| Polymethylhydridosiloxane Crosslinker (1.032 wt% SiH) | 4.37 | 3.00 |
| Vinyl stopped polydimethylsiloxane with a viscosity of ca 250 mPa.s with 1000 ppm Pt catalyst | 3.00 | 3.00 |
| Anchorage Additive or Comparative Additive | - | 2.00 |

The components were thoroughly mixed and the formulation was coated onto a Rexor 23 micron thick PET (non corona treated) with a deposition weight of 1.2 $g/m^2$ utilizing the coating knife of a Mathis Lab Coater. All samples were subjected to the same curing condition using an oven temperature of 130°C and 30 seconds as curing time.

The anchorage performance of the different prepared samples was evaluated by a finger rub-off test upon all samples were room temperature aged for 24 hrs. Additionally, the anchorage strengths to the PET substrate was quantified using an anchorage test[2], which provides a measure for the weight loss for the removed silicone coating as the effect of the mechanical abrasion (see table below).

[2] *Anchorage test: A PET specimen (round shaped; 10.0 $cm^2$) is pressed with a weight of 4.4 kg with its coated surface onto a textile felt strip. Subsequently, the PET specimen is shoved (at room temperature) with a constant velocity of 9.2 cm/ sec. over the felt strip until it completes a total distance of 70.0 cm. The felt strip is replaced for each test sample to*

*ensure the same abrasion conditions. The weight loss of the PET specimen (weight before and after the abrasion test) is taken as a measure for the adhesion strength of the coating layer to the substrate. i.e., a loss of 75 wt% material through abrasion refers to 25 wt% Durlac Test Material Retention.*

| | Anchorage Performance Evaluation: Anchorage Test | | | | |
|---|---|---|---|---|---|
| Functional Polysiloxane | Formulation | Curing Performance | Finger Rub-off Test[b] | Anchorage Test, Material Retention (wt%) | Anhydride cone in mmol/g |
| none | C | Good | (--) | 6 | - |
| A4 (invent) | D | Good | (++) | 96 | 0.37 |
| [b] Very strongly attached (++); very weakly attached (- -). | | | | | |

**Claims**

1. A functional polyorganosiloxane comprising at least one SiH group, at least one diorganosiloxy group, which does not comprise an acid anhydride group, and at least one siloxy group having at least one organic group bound to the silicon atom via a carbon atom, said organic group comprising at least one acid anhydride group, said functional polyorganosiloxane comprising siloxy units selected from the group consisting of:

   M: $R_3SiO_{1/2}$
   D: $R_2SiO_{2/2}$
   $D^H$: $R(H)SiO_{2/2}$
   $M^H$: $R_2(H)SiO_{1/2}$
   M*: $R_2R^1SiO_{1/2}$
   D*: $RR^1SiO_{2/2}$
   T: $RSiO_{3/2}$
   T*: $R^1SiO_{3/2}$
   $T^H$: $HSiO_{3/2}$
   Q: $SiO_{4/2}$
   wherein
   R represents an organic group, which does not comprise an acid anhydride group,
   $R^1$ represents an organic group, comprising at least one, preferably one acid anhydride group,
   with the proviso that the polyorganosiloxane comprises
   at least one siloxy unit M*,
   at least one siloxy unit $D^H$, and
   at least one siloxy unit D.

2. A functional polyorganosiloxane according to the previous claim, wherein the polyorganosiloxane is a linear polyorganosiloxane, having at least one terminal organic group comprising an acid anhydride group.

3. A functional polyorganosiloxane according to any of the previous claims, comprising at least 3, preferably at least 5, more preferably at least 8, still more preferably at least 10 siloxy units.

4. A functional polyorganosiloxane according to any of the previous claims, wherein the at least one acid anhydride group in the organic group bound to a silicon atom via a carbon atom comprises at least one acid anhydride group chosen from the following structures:

   - a succinic anhydride moiety of the formula:

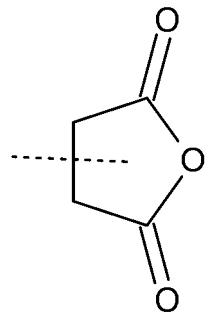

- a maleic anhydride moiety of the formula:

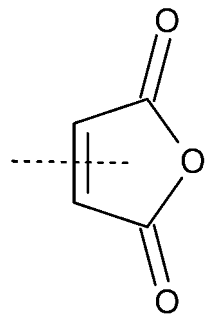

- a glutaric anhydride moiety of the formula:

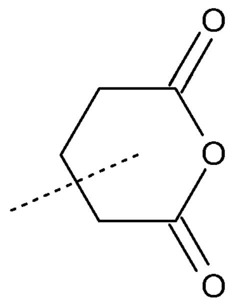

- a phthalic anhydride moiety of the formula:

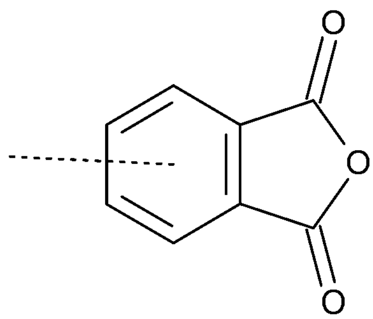

,

or

- a non-cyclic anhydride moiety of the formula:

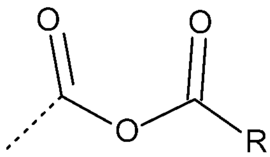

wherein the dotted lines in the above formulas are a single bond to the remaining part of the organic group that links to the silicon atom via a carbon atom, or, as the case may be, may also represent a direct bond to the silicon atom, and R is an organic group as defined above, preferably an alkyl group.

**5.** A functional polyorganosiloxane according to any of the previous claims, wherein the at least one acid anhydride group is derived from the hydrosilylation reaction of an unsaturated anhydride with an SiH-functional siloxy group.

**6.** A functional polyorganosiloxane according to any of the previous claims, wherein the at least one acid anhydride group is a succinic anhydride moiety of the formula:

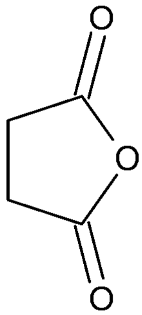

which moiety can be mono- or divalent and can be bound to a silicon atom with a single bond or a di- or a tri- valent organic group, preferably the succinic anhydride moiety is monovalent and is bound via a divalent organic group to a silicon atom.

**7.** Curable compositions comprising at least one functional polyorganosiloxane according to any of the previous claims, said curable compositions preferably comprising:

(A) at least one polyorganosiloxane having at least two unsaturated hydrocarbyl residues,
(B) at least one polyorganohydrogensiloxane,
(C) at least one hydrosilylation catalyst, comprising a transition metal,
(D) at least one functional polysiloxane as defined in any of the previous claims,
(E) optionally one or more fillers,
(F) optionally one or more auxiliary additives.

**8.** Cured compositions obtained by curing the curable compositions according to the previous claim.

**9.** Composite article, comprising the cured composition according to the previous claims in contact with at least one substrate selected from the group consisting of metal substrates, glass substrates, ceramic substrates, paper substrates, polymer substrates, preferably polyethylene, polypropylene, polycarbonates, and polyesters, preferably polyethylene terephthalates (PET).

**10.** Use of the curable compositions according to any of the previous claims for the manufacture of, or the use as release coatings, elastomers, in particular, self adhesive elastomers, (optical) bonding materials, and/or silicone encapsulants for electronic devices.

**11.** Use of the functional polysiloxane as defined in any of the previous claims as an adhesion promotor, and/or for the manufacture of release coatings, elastomer articles, in particular self adhesive elastomer articles, silicone encapsulants for electronic devices, and binding materials.

**12.** A method of coating substrates, comprising:

a) applying a curable coating composition comprising at least one functional polysiloxane as defined in any of the previous claims to at least one substrate, and
b) curing the curable coating composition.

**13.** A substrate having a release coating which is prepared from the curable compositions as defined in any of the previous claims, said substrate being chosen from polyethylene, polypropylene or PET, preferably said substrate having a release coating chosen from films, sheet substrates, or paper substrates, such as polycoated paper, poly coated kraft paper (PE and/or PP), glassine, CCK (clay coated kraft paper), SCK (super calendared kraft paper), HCK (Hybrid clay coated paper), MG (machine glazed paper) parchment and bakery paper.

**14.** A substrate in contact with a silicone rubber composition which is prepared from the curable compositions as defined in any of the previous claims.

## Patentansprüche

**1.** Ein funktionelles Polyorganosiloxan, das mindestens eine SiH-Gruppe, mindestens eine Diorganosiloxygruppe, die keine Säureanhydridgruppe umfasst, und mindestens eine Siloxygruppe, die mindestens eine organische Gruppe aufweist, die über ein Kohlenstoffatom an das Siliciumatom gebunden ist, umfasst, wobei die genannte organische Gruppe mindestens eine Säureanhydridgruppe umfasst, wobei das genannte funktionelle Polyorganosiloxan Siloxyeinheiten umfasst, die aus der Gruppe ausgewählt sind, die besteht aus:

M: $R_3SiO_{1/2}$
D: $R_2SiO_{2/2}$
$D^H$: $R(H)SiO_{2/2}$
$M^H$: $R_2(H)SiO_{1/2}$
M*: $R_2R^1SiO_{1/2}$
D*: $RR^1SiO_{2/2}$
T: $RSiO_{3/2}$
T*: $R^1SiO_{3/2}$
$T^H$: $HSiO_{3/2}$
Q: $SiO_{4/2}$
worin
R eine organische Gruppe darstellt, die keine Säureanhydridgruppe umfasst,
$R^1$ eine organische Gruppe darstellt, die mindestens eine, bevorzugt eine, Säureanhydridgruppe umfasst,
mit der Maßgabe, dass das Polyorganosiloxan
mindestens eine Siloxyeinheit M*,
mindestens eine Siloxyeinheit $D^H$ und
mindestens eine Siloxyeinheit D umfasst.

**2.** Ein funktionelles Polyorganosiloxan gemäß dem vorherigen Anspruch, wobei das Polyorganosiloxan ein lineares Polyorganosiloxan ist, das mindestens eine terminale organische Gruppe, die eine Säureanhydridgruppe umfasst, aufweist.

**3.** Ein funktionelles Polyorganosiloxan gemäß einem der vorherigen Ansprüche, die mindestens 3, bevorzugt mindestens 5, bevorzugter mindestens 8, und noch bevorzugter mindestens 10 Siloxyeinheiten umfasst.

**4.** Ein funktionelles Polyorganosiloxan gemäß einem der vorherigen Ansprüche, wobei die mindestens eine Säureanhydridgruppe in der organischen Gruppe, die über ein Kohlenstoffatom an ein Siliciumatom gebunden ist, mindestens eine Säureanhydridgruppe umfasst, die aus den folgenden Strukturen ausgewählt ist:

- eine Bernsteinsäureanhydridgruppe der Formel:

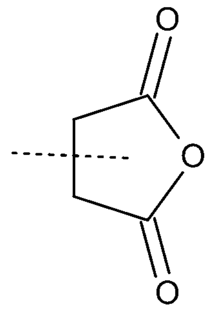

- eine Maleinsäureanhydridgruppe der Formel:

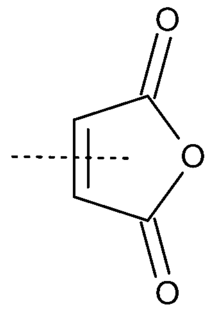

- eine Glutarsäureanhydridgruppe der Formel:

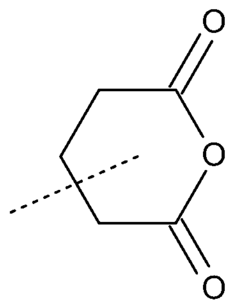

- eine Phthalsäureanhydridgruppe der Formel:

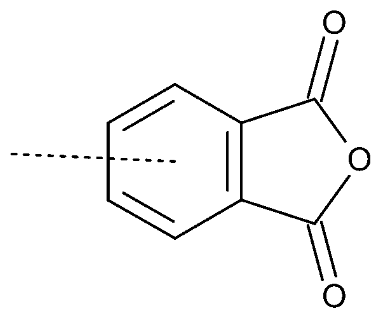

,

oder

- eine nicht-cyclische Anhydridgruppe der Formel:

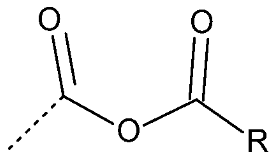

worin die gepunkteten Linien in den obigen Formeln Einfachbindungen zu dem übrigen Teil der organischen Gruppe, die über ein Kohlenstoffatom an das Siliciumatom gebunden ist, sind, oder, je nach Lage des Falls, auch eine direkte Bindung zu dem Siliciumatom darstellen können, und R eine organische Gruppe wie oben definiert darstellt, bevorzugt eine Alkylgruppe.

**5.** Ein funktionelles Polyorganosiloxan gemäß einem der vorherigen Ansprüche, wobei die mindestens eine Säureanhydridgruppe von der Hydrosilylierungsreaktion eines ungesättigten Anhydrids mit einer SiH-funktionellen Siloxygruppe abgeleitet ist.

**6.** Ein funktionelles Polyorganosiloxan gemäß einem der vorherigen Ansprüche, wobei die mindestens eine Säureanhydridgruppe eine Bernsteinsäureanhydridgruppe der Formel:

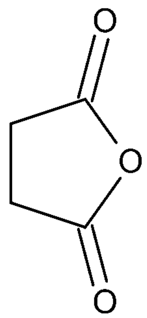

ist,
wobei diese Gruppe ein- oder zweiwertig sein kann und mit einer Einfachbindung oder einer zwei- oder einer dreiwertigen organischen Gruppe an ein Siliciumatom gebunden sein kann, bevorzugt ist die Bernsteinsäureanhydridgruppe einwertig und ist über eine zweiwertige organische Gruppe an ein Siliciumatom gebunden.

**7.** Härtbare Zusammensetzungen, die mindestens ein funktionelles Polyorganosiloxan gemäß einem der vorherigen Ansprüche enthalten, wobei die genannten härtbaren Zusammensetzungen bevorzugt umfassen:

(A) mindestens ein Polyorganosiloxan, das mindestens zwei ungesättigte Kohlenwasserstoffreste aufweist,
(B) mindestens ein Polyorganohydrogensiloxan,
(C) mindestens einen Hydrosilylierungskatalysator, der ein Übergangsmetall umfasst,
(D) mindestens ein wie in einem der vorherigen Ansprüche definiertes funktionelles Polysiloxan,
(E) wahlweise einen oder mehr Füllstoffe,
(F) wahlweise einen oder mehr Hilfszusatzstoffe.

**8.** Gehärtete Zusammensetzungen, die durch das Härten der härtbaren Zusammensetzungen gemäß dem vorherigen Anspruch erhalten werden.

**9.** Verbundkörper, der die gehärtete Zusammensetzung gemäß den vorherigen Ansprüchen in Kontakt mit mindestens einem Trägermaterial ausgewählt aus der Gruppe bestehend aus Metallträgermaterialien, Glasträgermaterialien, keramischen Trägermaterialien, Papierträgermaterialien, Polymerträgermaterialien, bevorzugt Polyethylen, Polypropylen, Polycarbonate, und Polyestern, bevorzugt Polyethylenterephthalat (PET), umfasst.

**10.** Verwendung der härtbaren Zusammensetzungen gemäß den vorherigen Ansprüchen zur Herstellung von, oder zum Gebrauch als Trennbeschichtungen, Elastomere, insbesondere selbstklebende Elastomere, (optische) Verbindungsmaterialien, und/oder Silikonvergussmassen für elektronische Geräte.

**11.** Verwendung des in den vorherigen Ansprüchen definierten funktionellen Polysiloxans als ein Haftvermittler, und/oder

zur Herstellung von Trennbeschichtungen, Elastomergegenständen, insbesondere von selbstklebenden Elastomergegenständen, Silikonvergussmassen für elektronische Geräte, und Bindematerialien.

**12.** Ein Verfahren zur Beschichtung von Trägermaterialien, das umfasst:

a) Das Auftragen einer härtbaren Beschichtungszusammensetzung, die mindestens ein in den vorherigen Ansprüchen definiertes funktionelles Polysiloxan umfasst, auf mindestens ein Trägermaterial,
und
b) das Härten der härtbaren Beschichtungszusammensetzung.

**13.** Ein Trägermaterial, das eine Trennbeschichtung aufweist, die aus den in den vorherigen Ansprüchen definierten härtbaren Zusammensetzungen hergestellt ist, wobei das genannte Trägermaterial aus Polyethylen, Polypropylen oder PET ausgewählt ist, bevorzugt ist das genannte Trägermaterial, das eine Trennbeschichtung aufweist, ausgewählt aus Folien, Trägermaterialien in Plattenform, oder Papierträgermaterialien, wie etwa mehrfach beschichtetes Papier, mehrfach beschichtetes Kraftpapier (PE und/oder PP), Pergamin, CCK (tonbeschichtetes Kraftpapier), SCK (superkalandriertes Kraftpapier), HCK (hybridtonbeschichtetes Papier), MG (maschinell glasiertes Papier) Pergament und Backpapier.

**14.** Ein Trägermaterial in Kontakt mit einer Silikonkautschukzusammensetzung, die aus den in den vorherigen Ansprüchen beschriebenen härtbaren Zusammensetzungen hergestellt ist.

**Revendications**

**1.** Polyorganosiloxane fonctionnel comprenant au moins un groupe SiH, au moins un groupe diorganosiloxy, qui ne comprend pas de groupe anhydride d'acide, et au moins un groupe siloxy ayant au moins un groupe organique lié à l'atome de silicium par l'intermédiaire d'un atome de carbone, ledit groupe organique comprenant au moins un groupe anhydride d'acide, ledit polyorganosiloxane fonctionnel comprenant des motifs siloxy choisis dans le groupe constitué par:

M: $R_3SiO_{1/2}$
D: $R_2SiO_{2/2}$
$D^H$: $R(H)SiO_{2/2}$
$M^H$: $R_2(H)Si_{1/2}$
M*: $R_2R^1SiO_{1/2}$
D*: $RR^1SiO_{2/2}$
T: $RSiO_{3/2}$
T*: $R^1SiO_{3/2}$
$T^H$: $HSiO_{3/2}$
Q: $SiO_{4/2}$
dans lequel
R représente un groupe organique qui ne comprend pas de groupe anhydride d'acide,
$R^1$ représente un groupe organique, comprenant au moins un, de préférence un groupe anhydride d'acide,
à condition que le polyorganosiloxane comprenne au moins
un motif siloxy M*,
au moins un motif siloxy $D^H$
et au moins un motif siloxy D.

**2.** Polyorganosiloxane fonctionnel selon la revendication précédente, dans lequel le polyorganosiloxane est un polyorganosiloxane linéaire ayant au moins un groupe organique terminal comprenant un groupe anhydride d'acide.

**3.** Polyorganosiloxane fonctionnel selon l'une des revendications précédentes, comprenant au moins 3, de préférence au moins 5, plus préférablement au moins 8, encore plus préférablement au moins 10 motifs siloxy.

**4.** Polyorganosiloxane fonctionnel selon l'une des revendications précédentes, dans lequel l'au moins un groupe anhydride d'acide dans le groupe organique lié à un atome de silicium par l'intermédiaire d'un atome de carbone comprend au moins un groupe anhydride d'acide choisi parmi les structures suivantes :

- un fragment anhydride succinique de formule :

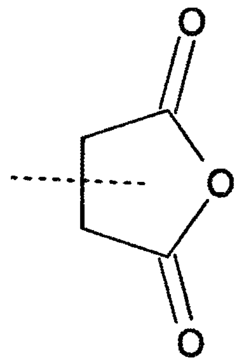

- un fragment anhydride maléique de formule :

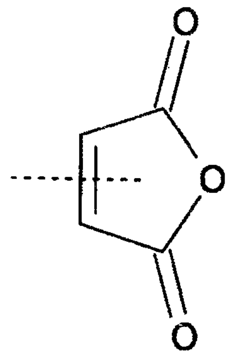

- un fragment anhydride glutarique de formule ;

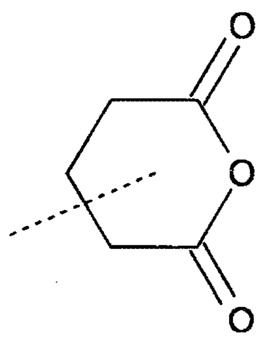

- un fragment anhydride phtalique de formule :

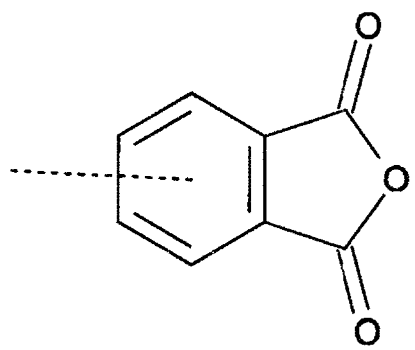

,

ou

- un fragment anhydride non cyclique de formule :

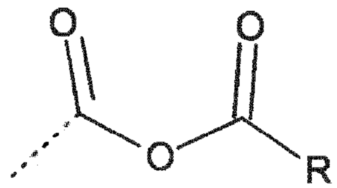

où les lignes en pointillés dans les formules ci-dessus sont une liaison simple à la partie restante du groupe organique qui se lie à l'atome de silicium par l'intermédiaire d'un atome de carbone, ou, selon le cas, peuvent également représenter une liaison directe à l'atome de silicium, et R est un groupe organique tel que défini ci-dessus, de préférence un groupe alkyle.

5. Polyorganosiloxane fonctionnel selon l'une des revendications précédentes, dans lequel l'au moins un groupe anhydride d'acide est dérivé de la réaction d'hydrosilylation d'un anhydride insaturé avec un groupe siloxy à fonction SiH.

6. Polyorganosiloxane fonctionnel selon l'une des revendications précédentes, dans lequel l'au moins un groupe anhydride d'acide est un fragment anhydride succinique de formule :

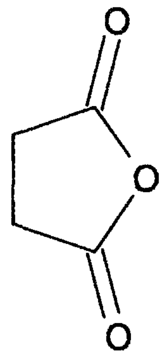

lequel fragment peut être mono- ou divalent et peut être lié à un atome de silicium avec une liaison simple ou un groupe organique di- ou trivalent, de préférence le fragment anhydride succinique est monovalent et est lié par l'intermédiaire d'un groupe organique divalent à un atome de silicium.

7. Compositions durcissables comprenant au moins un polyorganosiloxane fonctionnel selon l'une des revendications précédentes, lesdites compositions durcissables comprenant de préférence :

(A) au moins un polyorganosiloxane ayant au moins deux résidus hydrocarbyle insaturés,
(B) au moins un polyorganohydrogénosiloxane,
(C) au moins un catalyseur d'hydrosilylation, comprenant un métal de transition,
(D) au moins un polysiloxane fonctionnel tel que défini dans l'une des revendications précédentes,
(E) éventuellement une ou plusieurs charges,
(F) éventuellement un ou plusieurs additifs auxiliaires.

8. Compositions durcies obtenues par durcissement des compositions durcissables selon la revendication précédente.

9. Article composite, comprenant la composition durcie selon les revendications précédentes en contact avec au moins un substrat choisi dans le groupe constitué par des substrats métalliques, des substrats en verre, des substrats en céramique, des substrats en papier, des substrats en polymère, de préférence le polyéthylène, le polypropylène, les polycarbonates, et les polyesters, de préférence les polyéthylène téréphtalates (PET).

10. Utilisation des compositions durcissables selon l'une des revendications précédentes pour la fabrication, ou l'utilisation en tant que revêtements anti-adhésifs, d'élastomères, en particulier d'élastomères auto-adhésifs, de matériaux de liaison (optiques) et/ou d'encapsulants en silicone pour dispositifs électroniques.

**11.** Utilisation du polysiloxane fonctionnel tel que défini dans l'une des revendications précédentes comme promoteur d'adhérence, et/ou pour la fabrication de revêtements anti-adhésifs, d'articles en élastomère, en particulier d'articles en élastomères auto-adhésifs, d'encapsulants en silicone pour dispositifs électroniques, et de matériaux de liaison.

**12.** Procédé de revêtement de substrats, comprenant :

a) l'application d'une composition de revêtement durcissable comprenant au moins un polysiloxane fonctionnel tel que défini dans l'une des revendications précédentes à au moins un substrat, et
b) le durcissement de la composition de revêtement durcissable.

**13.** Substrat ayant un revêtement anti-adhésif qui est préparé à partir des compositions durcissables telles que définies dans l'une des revendications précédentes, ledit substrat étant choisi parmi le polyéthylène, le polypropylène ou le PET, de préférence ledit substrat ayant un revêtement anti-adhésif choisi parmi des films, des substrats en feuille, ou des substrats en papier, tels que le papier polycouché, le papier kraft polycouché (PE et/ou PP), le papier cristal, le CCK (papier kraft couché au kaolin), le SCK (papier kraft super calandré), le HCK (papier couché au kaolin hybride), le parchemin de MG (papier frictionné sur machine) et le papier de boulangerie.

**14.** Substrat en contact avec une composition de caoutchouc de silicone qui est préparée à partir des compositions durcissables telles que définies dans l'une des revendications précédentes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7842394 B
- US 7906605 B2
- US 9562149 B2
- US 7199205 B
- US 7090923 B
- US 8343632 B
- US 3899515 A
- US 4381396 A
- US 5015700 A
- US 6743884 B
- WO 2011081165 A
- WO 2017051084 A
- US 9993812 B2
- US 3159601 A
- US 3159662 A
- US 3419593 A
- US 3715334 A
- US 3775452 A
- US 3814730 A
- US 20130158281 A1
- WO 2013090548 A1
- WO 2011006049 A1
- US 20110009573 A1
- WO 2011006044 A2
- US 20110009565 A1
- US 9387468 B
- US 20180015449 A
- US 20180201634 A
- US 9890182 B
- US 9371339 B
- US 3197432 A
- US 3220972 A
- US 5109095 A
- US 7846550 B2
- US 3527659 A
- US 5308887 A
- US 20080281055 A1
- US 5942557 A
- US 20090197100 A1
- US 9487639 B
- JP 2005344102 A
- WO 2009084730 A1
- WO 2009084733 A1
- WO 2011107592 A
- WO 2013158272 A1
- WO 2017012714 A


### Non-patent literature cited in the description


- The Analytical Chemistry of Silicones. Chemical Analysis. J. Wiley & Sons, 1991, vol. 112, 356